(19) Europäisches Patentamt
European Patent Office
Office européen des brevets

(11) EP 3 553 101 A1

(12) EUROPEAN PATENT APPLICATION
published in accordance with Art. 153(4) EPC

(43) Date of publication:
**16.10.2019 Bulletin 2019/42**

(21) Application number: **17879614.0**

(22) Date of filing: **07.12.2017**

(51) Int Cl.:
*C08F 291/00* (2006.01) *B01D 39/16* (2006.01)
*C08J 5/24* (2006.01) *C08J 9/24* (2006.01)
*C08L 51/00* (2006.01) *C09D 133/08* (2006.01)
*C09D 151/00* (2006.01) *C09D 151/06* (2006.01)
*C09D 175/04* (2006.01) *C10M 171/00* (2006.01)
*C10N 30/02* (2006.01) *C10N 30/06* (2006.01)

(86) International application number:
**PCT/JP2017/043926**

(87) International publication number:
**WO 2018/105682 (14.06.2018 Gazette 2018/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority:
**09.12.2016 JP 2016239294**
**09.12.2016 JP 2016239295**
**14.02.2017 JP 2017024876**
**01.03.2017 JP 2017038368**
**21.06.2017 JP 2017121268**
**22.09.2017 JP 2017182494**
**04.12.2017 JP 2017232592**

(71) Applicant: **Mitsui Chemicals, Inc.**
**Minato-ku**
**Tokyo 105-7122 (JP)**

(72) Inventors:
- **MORI Akihide**
**Sodegaura-shi**
**Chiba 299-0265 (JP)**
- **OKAMOTO Masahiko**
**Sodegaura-shi**
**Chiba 299-0265 (JP)**
- **HARADA Katsuyoshi**
**Sodegaura-shi**
**Chiba 299-0265 (JP)**
- **YAMADA Takahiro**
**Sodegaura-shi**
**Chiba 299-0265 (JP)**
- **YAMAMOTO Shuhei**
**Sodegaura-shi**
**Chiba 299-0265 (JP)**
- **TAKAHASHI Kiyoshi**
**Takaishi-shi**
**Osaka 592-0001 (JP)**
- **YAMAMURA Kiyoshi**
**Takaishi-shi**
**Osaka 592-0001 (JP)**
- **SUZUKI Koutarou**
**Sodegaura-shi**
**Chiba 299-0265 (JP)**
- **SEKI Ryouichi**
**Sodegaura-shi**
**Chiba 299-0265 (JP)**
- **MATSUNAGA Shinya**
**Sodegaura-shi**
**Chiba 299-0265 (JP)**

(74) Representative: **J A Kemp**
**14 South Square**
**Gray's Inn**
**London WC1R 5JJ (GB)**

# (54) GRAFT COPOLYMER-CONTAINING SOLID PRODUCT AND USE THEREOF

(57) [Problem] To provide a core-shell type graft copolymer having a high proportion of various functional groups introduced only to the surface of the polymer with the physical properties and shape of a raw material polymer substantially retained. [Solution] This core-shell type polymer solid product comprises a graft copolymer (C) having a main chain portion derived from a precursor polymer (A) and a graft portion derived from a polymer (B), wherein a core portion (a) of the solid product comprises the main chain portion derived from (A), a shell portion (b) of the solid product comprises the graft portion derived from (B), and the solid product satisfies requirement (I). Requirement (I): In infrared absorption spectroscopic measurement of a section passing through a cent-



Printed by Jouve, 75001 PARIS (FR)

(Cont. next page)

er (x) of the solid product, a point (z) on a surface where a distance between the center (x) and the surface is shortest, and a middle point (y) of a line connecting the center (x) and the point (z), absorbance (Abs) satisfies $X < 0.01$, $Y < 0.01$, and $Z \geq 0.01$, wherein X, Y, and Z represent values of Abs (key band of the polymer (B))/Abs (key band of the polymer (A)) at the center (x), the middle point (y) and the point (z), respectively.

## Description

Technical Field

The present invention relates to a graft copolymer-containing solid product and uses thereof.

Background Art

Polyolefins have many excellent merits such as chemical resistance and mechanical properties but have a drawback of having a low affinity with a polar substance because polyolefins are nonpolar polymers. To overcome this drawback, a method of modifying a polyolefin by adding a polar group derived from an organic carboxylic acid or the like having a carbon-carbon double bond to the polyolefin through a graft reaction using an organic peroxide as an initiator has been utilized in the past.

As such modification of a polyolefin, a method of modifying a polyolefin by blending a modifying agent with the polyolefin and extruding the polyolefin in a molten state at a high temperature under a high shear using an extrusion molding machine or the like (melting method), a method of dissolving a polyolefin in a solvent and blending a modifying agent with this solution to perform modification of the polyolefin (solution method), and the like have been adopted.

However, in the melting method, particularly in polyolefins containing tertiary carbon, such as polypropylene, polybutene, and polymethylpentene, decomposition is liable to occur at a site of the tertiary carbon. In addition, in polyolefins containing secondary carbon, such as polyethylene and a polymer using ethylene as the main component, crosslink is liable to occur at a site of the secondary carbon. The reaction of grafting an organic carboxylic acid or the like having a carbon-carbon bond is a graft reaction and therefore makes the decomposition or the crosslinking reaction more remarkable in the case where a modified polyolefin having a high amount grafted needs to be obtained. Accordingly, it is difficult to achieve both of the amount grafted and the molecular weight in the melting method.

In addition, in the solution method, it is possible in principle to suppress the decomposition or the crosslinking reaction by setting the reaction temperature to lower than in the melting method, but on the other hand, in such a reaction condition at a low temperature, a problem is for example that generally, the viscosity of a solution becomes extremely high to make it difficult to stir the solution. Therefore, it is also difficult to achieve both the amount grafted and the molecular weight in the solution method.

In modified polymers obtained by these conventional modification methods, some physical properties of a raw material polymer remarkably changes after modification. For example, the shape of a raw material polymer cannot be retained after modification, and in addition, the molecular weight remarkably changes accompanying the crosslink and the decomposition. Therefore, the conventional modification methods have not been suitable in the case where only the surface of a polymer needs to be modified with the physical properties which are characteristic of the raw material polymer maintained.

Further, with respect to surface coating, or electron beam irradiation, corona treatment, or the like which is a conventionally known method of modifying a polymer surface, there has been the following problem: it has been difficult to add a sufficient amount of surface functional groups and, besides, the amount of the functional groups decreases depending on the passage of time and the use environments such as surface washing.

As an example of studies in which both of the amount grafted and the molecular weight have been achieved, a solid phase modification method of modifying a polyolefin polymer at a temperature equal to or lower than the melting point of the polyolefin polymer is studied (Patent Literature 1). However, in the solid phase modification method, a solvent having a good affinity with a solid is used in order to increase the amount grafted, and therefore there is a tendency that as a result, both of the structure in which grafting is performed uniformly into the inside of the solid phase and the molecular weight vary, so that the solid phase modification method is not suitable in the case where functional groups need to be grafted only to a polymer surface with the physical properties kept, or other cases.

As an example of studies to maintain the molecular weight in particular in the graft techniques, graft polymerization to a polymer using an alkylboron as an initiator was studied (Patent Literature 2, and Non Patent Literatures 1 and 2).

Further, polyolefins are used in various technical fields.

For example, coating materials have been used in the past for the purpose of protecting surfaces for various uses, and urethane coatings have been used in a wide range such as uses for various industrial machines, automobiles, building materials, and home electric appliances. Particularly in the urethane coatings used for the parts which are contacted with plastics, metals, glass, and the like, and slide in the uses for industrial machines, automobiles, and building materials, excellent sliding properties and wear resistance are required. In addition, from the viewpoints of global environmental protection, an influence and the like on human bodies by solvent inhalation, and occupational safety and health in recent years, coatings using water are used more than coatings using a solvent. On improvements in the sliding properties and wear resistance of a coating, various studies have been conducted so far.

From the viewpoint of improvements in sliding properties and wear resistance, a technique is known by which

the sliding properties and scratch resistance are improved by adding an ultra-high molecular weight polyethylene powder having predetermined properties such as having a viscosity average molecular weight of 100000 to 10000000 to a coating raw material (Patent Literature 3). In addition, a technique is disclosed by which the sliding properties and the wear resistance are improved by adding polytetrafluoroethylene and a scale-like solid lubricating material to a coating (Patent Literature 4).

By using these methods, it is certain that the friction coefficient of a coating film is decreased and improvements in the scratch resistance and the wear resistance are recognized. However, the interface adhesion between the coating film and the ultra-high molecular weight polyethylene powder or polytetrafluoroethylene is weak, and therefore the wear resistance is not yet satisfactory and there is room for improvements. Further, with respect to addition to an aqueous coating, the dispersibility between the additive and water is poor, so that floating to the water surface in the case of the ultra-high molecular weight polyethylene powder and sedimentation in the case of polytetrafluoroethylene occur and the problem of a poor handling property is left unsolved.

In addition, for example, curable epoxy resins have excellent heat resistance, electric properties, mechanical properties, and the like, and therefore have been widely used in the past as electric/electronic materials, coatings, adhesives, and fiber reinforced composite materials, and the like. In addition, curable phenol resins have excellent mechanical properties, electric properties, heat resistance, and adhesiveness, and have been used as a binder for friction materials such as a disk pad and a drum brake lining. In these uses, excellent sliding properties and wear resistance are required for the parts which are contacted with plastics, metals, glass, and the like, and slide.

From the viewpoint of improvements in the sliding properties and the wear resistance, the above-described technique described in Patent Literature 3 is known but has the above-described problem. In addition, a composition for forming a lubricative coating film comprising an ultraviolet-curable resin and a lubricity imparting agent such as silicone oil is disclosed (Patent Literature 5) but has the problem of causing various troubles, for example, due to precipitation of low-molecular-weight siloxane contained in the composition through heat decomposition, or other problems.

In addition, for example, fiber reinforced composite materials obtained by impregnating a reinforced fiber base material with a resin are used for a wide range of uses as materials having both lightweight properties and mechanical properties. Among others, carbon fiber reinforced composite materials obtained by impregnating a carbon fiber base material with a thermosetting resin have excellent specific strength, specific rigidity, and heat resistance, and are developed for wide uses such as structural members for air planes, blades for wind power generation, automobile members, housings of electronic equipment, and members for sporting goods, so that the demand for the carbon fiber reinforced composite materials has been increasing year after year.

As a matrix resin constituting the fiber reinforced composite materials, a thermosetting resin having excellent impregnation properties and heat resistance is often used. As such a thermosetting resin, epoxy resins, phenol resins, melanin resins, bismaleimide resins, unsaturated polyester resins, and the like are used. Among others, epoxy resins are widely used because epoxy resins have excellent heat resistance and moldability and, when made into carbon fiber composite materials, give high levels of mechanical properties.

As a method for producing a fiber reinforced composite material, various methods are applied according to the aspects and required physical properties of products; however, using a method in which an intermediate material (prepreg) in the form of a sheet obtained by impregnating a carbon fiber with a thermosetting resin as a matrix resin is used is the most common. A fiber reinforced composite material having high specific strength, specific rigidity, and heat resistance can be produced by laminating a plurality of prepregs in an arbitrary direction and curing a resin by heating.

Among others, the carbon fiber composite materials have been studied for the purpose of enhancing the strength and rigidity (elastic modulus) of matrix resins after curing in order to utilize the high levels of mechanical properties of the carbon fibers. However, matrix resins having a high rigidity have a low toughness, and therefore a crack may occur to the matrix resins in some cases due to external force such as shock, so that there have been problems in safety and durability in practical uses. Particularly in composite materials obtained by laminating prepregs, lowering of mechanical properties due to interlayer fracture is a problem, and various methods for improving the interlayer fracture toughness have been studied. Among others, a lot of methodologies for dispersing a material, which is different from the matrix resin, in the interlayer to absorb the fracture energy generated by the load of stress have been proposed.

As one example, a technique of dispersing a polyamide particle in a matrix resin is proposed (Patent Literature 6). However, polyamides have a characteristic that the mechanical properties are lowered due to moisture absorption, and therefore there has been the following problem: the mechanical properties of fiber reinforced composite materials change with time. In addition, techniques of dispersing a silicone particle or a urethane particle in a matrix resin, thereby improving shear mode (mode II) interlayer fracture toughness are proposed (Patent Literatures 7 and 8). However, when the amount of a polymer particle added is increased in order to obtain a sufficient effect of improving the interlayer fracture toughness, there have been the problem of lowering of the specific strength/specific rigidity, which are merits of the fiber reinforced composite materials, the problem of lowering of the handling properties of prepregs, and other problems. In addition, a fiber reinforced composite material using, as a matrix resin, a thermosetting resin comprising a compound having a benzoxazine ring and a polyether sulfone particle is proposed (Patent Literature 9). However, the

fiber reinforced composite material only exhibits an effect that is a little better than the effect of the composite material in which the polyamide particle is dispersed, and therefore the interlayer fracture toughness has not been sufficient.

In addition, as one example, a technique of dispersing an ultra-high molecular weight polyethylene particle in a matrix resin is proposed (Patent Literature 10), and an improvement in the interlayer fracture toughness is reported; however, there have still been demands for further improvements.

In addition, for example, hydrophilic porous sheets are useful as a filtration filter, an adsorption buffer material, a solution-holding material, and a separator sheet which are used, for example, in uses for various industrial machines, automobiles, building materials, and the like. As such a porous sheet, a sintered sheet is known.

The sintered sheet can be obtained by sintering a polyolefin particle, but unmodified polyolefin particles are non-polar, and therefore a sintered sheet obtained by sintering an unmodified polyolefin particle has a poor hydrophilicity.

On the other hand, methods for modifying a polyolefin particle include a method in which a peroxide is used and a method in which a radical produced by electron beam irradiation and a reactive group are reacted (Patent Literature 11). Modified polyolefin particles obtained by these methods are not suitable for producing a sintered sheet because a reaction of crosslinking polyolefin has progressed.

Methods for making a sintered sheet of a polyolefin particle having a hydrophilicity include methods of sintering a polyolefin particle and then performing modification or plasma treatment (Patent Literatures 12 and 13) and a method of mixing a hydrophilic particle in a polyolefin particle with a mixer and then sintering a resultant mixture (Patent Literature 14). However, according to studies conducted by the present inventors, the methods given as an example in Patent Literatures 12 to 14 may cause significant lowering of the strength of a sintered sheet in some cases due to the reaction of crosslinking polyolefins produced in a production process, and therefore there has been room for improvements.

Citation List

Patent Literature

Patent Literature 1: International Publication No. WO 2016/039461
Patent Literature 2: U.S. Patent No. 3141862A
Patent Literature 3: Japanese Patent Laid-Open No. 2013-170231
Patent Literature 4: Japanese Patent Laid-Open No. 9-111179
Patent Literature 5: Japanese Patent Laid-Open No. 2004-176054
Patent Literature 6: Japanese Patent Laid-Open No. 2009-221460
Patent Literature 7: Japanese Patent Laid-Open No. 2011-057907
Patent Literature 8: Japanese Patent Laid-Open No. 2012-193322
Patent Literature 9: Japanese Patent Laid-Open No. 2014-009280
Patent Literature 10: International Publication No. WO 2016/136540
Patent Literature 11: Japanese Patent Laid-Open No. 2011-080013
Patent Literature 12: Japanese Patent Laid-Open No. 2016-194065
Patent Literature 13: Japanese Patent No. 5805931
Patent Literature 14: Japanese Patent No. 3686172

Non Patent Literature

Non Patent Literature 1: MACROMOLECULES: vol38, 8966-8970(2005)
Non Patent Literature 2: Journal of Polymer Science Part A: vol47, 6163-6167(2009)

Summary of Invention

Technical Problem

In Patent Literature 2, a graft reaction is performed in a solution using a solvent having a high affinity with a polymer, and therefore the shape of the raw material polymer cannot be retained. In addition, in Non Patent Literature 1, only a reaction of grafting maleic anhydride to polypropylene is given as an example, and solid phase modification is performed in an organic solvent having a high affinity with polypropylene, so that grafting is performed uniformly into the inside of the solid phase, which is the same as in Patent Literature 1. Further, in Non Patent Literature 2, a graft reaction

is given as an example as a surface modification method for a polymer, but the molecular structures of obtained polymers are not referred to, and the grafting rate are also low.

As described above, with respect to the conventional graft reactions to a polymer using an alkylboron as an initiator, a core-shell type graft copolymer in which functional groups are grafted only to the surface of the polymer and a high grafting rate can be achieved has not been created.

In addition, as described above, with respect to the conventional graft reactions to a polymer using an alkylboron as an initiator, a gradient type graft copolymer in which more functional groups are grafted near the surface than in the central portion of the polymer and a high grafting rate can be achieved has not been created.

Thus, an object of the present invention is to provide a core-shell type graft copolymer having a high proportion of various functional groups introduced only to the surface of the polymer with the physical properties and shape of a raw material polymer substantially retained.

In addition, an object of the present invention is to provide a gradient type graft copolymer having a higher proportion of various functional groups near the surface of the polymer than in the central portion of the polymer with the physical properties and shape of a raw material polymer substantially retained.

In addition, an object of the present invention is to provide: a coating composition and an aqueous dispersion composition each having a good dispersibility into an aqueous coating and each capable of forming a film having an excellent wear resistance; a curable resin composition with which a cured product having an excellent wear resistance can be obtained; a sliding part using the curable resin composition; a fiber reinforced composite material having excellent interlayer fracture toughness and heat resistance; and a fiber reinforced composite material using the prepreg.

In addition, an object of the present invention is to provide a sintered sheet having a high hydrophilicity and a high strength.

Solution to Problem

The present inventors have conducted diligent studies in consideration of the above circumstances to complete the present invention

That is, the present invention relates to the following [1] to [38].

[1] A core-shell type polymer solid product comprising a graft copolymer (C) having: a main chain portion derived from a precursor polymer (A); and a graft portion derived from a polymer (B) different from the polymer (A), wherein: a core portion (a) of the solid product comprises the main chain portion derived from the precursor polymer (A), and a shell portion (b) of the solid product comprises the graft portion derived from the polymer (B); and the core-shell type polymer solid product satisfies the following requirement (I).

Requirement (I): In infrared absorption spectroscopic measurement of a section passing through a center (x) of the solid product, a point (z) on a surface where a distance between the center (x) and the surface is shortest, and a middle point (y) of a line connecting the center (x) and the point (z), absorbance (Abs) at the center (x), at the middle point (y), and at the point (z) satisfy the following relationship.

$$X < 0.01,$$

$$Y < 0.01,$$

and

$$Z \geq 0.01,$$

wherein

X represents a value of Abs (key band of polymer (B))/Abs (key band of polymer (A)) at the center (x), Y represents a value of Abs (key band of polymer (B))/Abs (key band of polymer (A)) at the middle point (y), and Z represents a value of Abs (key band of polymer (B))/Abs (key band of polymer (A)) at the point (z).

[2] The core-shell type polymer solid product according to [1], being a particle (S) having an average particle diameter of 0.0001 mm to 1000 mm.

[3] The core-shell type polymer solid product according to [1], being a molded article having an average thickness or diameter of 0.0001 mm to 50 mm.

[4] The core-shell type polymer solid product according to any one of [1] to [3], wherein the precursor polymer (A) is a polymer obtained from one, or two or more α-olefins selected from α-olefins having 2 to 18 carbon atoms.
[5] The core-shell type polymer solid product according to any one of [1] to [4], wherein the polymer (B) is a polymer of a monomer component comprising at least one monomer (b1) having an ethylenically unsaturated group and a polar functional group within a same molecule.
[6] The core-shell type polymer solid product according to any one of [1] to [5], the grafting rate represented by the following expression.

$$\text{Grafting rate (\%)} = [\text{mass of polymer (B)}/\text{mass of precursor polymer (A)}] \times 100$$

[7] A method for producing the core-shell type polymer solid product according to any one of [1] to [6], the method comprising grafting the polymer (B) different from the polymer (A) to a solid product comprising the precursor polymer (A) with a shape of the solid product retained, thereby producing the solid product having the core portion (a) comprising a structure unit derived from the polymer (A) and the shell portion (B) comprising a structure unit derived from the polymer (B).
[8] The method for producing the core-shell type polymer solid product according to [7], wherein the solid product comprising the precursor polymer (A) is a particle having an average particle diameter of 0.0001 mm to 1000 mm.
[9] The method for producing the core-shell type polymer solid product according to [7], wherein the solid product comprising the precursor polymer (A) is a molded article having an average thickness or diameter of 0.0001 mm to 50 mm.
[10] An aqueous dispersion composition comprising: a particle (S) being the core-shell type polymer solid product according to [1], [4], [5], or [6] (provided that "a center (x) of the solid product" in the requirement (I) is replaced by "a center (x) of the particle (S)"); and water.
[11] The aqueous dispersion composition according to [10], wherein the particle (S) has an average particle diameter of 150 μm or less.
[12] A coating composition comprising the aqueous dispersion composition according to [10] or [11].
[13] The coating composition according to [12], further comprising one or more selected from a urethane resin and an acrylic resin.
[14] A film formed from the coating composition according to [12] or [13].
[15] A film-formed product obtained by applying the coating composition according to [12] or [13] to a base substance comprising a woody material, a building material, a civil engineering material, an automobile material, a terminal material, an electric/electronic material, an OA equipment material, a sporting tool material, a footwear material, a fiber flocking material, or a packaging material.
[16] A curable resin composition comprising: a particle (S) being the core-shell type copolymer solid product according to [1], [4], [5], or [6] (provided that "a center (x) of the solid product" in the requirement (I) is replaced by "a center (x) of the particle (S)"); a curable resin (D); and a curing agent (E).
[17] The curable resin composition according to [16], wherein the particle (S) has an average particle diameter of 150 μm or less.
[18] The curable resin composition according to [16] or [17], wherein the curable resin (D) comprises one or more selected from an epoxy resin and a phenol resin.
[19] A cured product of the curable resin composition according to any one of [16] to [18].
[20] A sliding part using the curable resin composition according to any one of [16] to [18] or the cured product according to [19].
[21] A prepreg comprising: a reinforced fiber (F); and a resin composition (G), wherein the resin composition (G) comprises: 0.1 to 20% by mass of a particle (S) being the core-shell type polymer solid product according to [1], [4], [5], or [6] (provided that "a center (x) of the solid product" in the requirement (I) is replaced by "a center (x) of the particle (S)"); a thermosetting resin (H); and a curing agent (I).
[22] The prepreg according to [21], wherein the particle (S) is a non-crosslinked body or a crosslinked body.
[23] The prepreg according to [21] or [22], wherein the particle (S) has an average particle diameter of 150 μm or less.
[24] The prepreg according to any one of [21] to [23], wherein the reinforced fiber (F) is a carbon fiber.
[25] The prepreg according to any one of [21] to [24], wherein the thermosetting resin (H) is an epoxy resin, and the curing agent (I) is an epoxy curing agent.
[26] A fiber reinforced composite material obtained by curing the prepreg according to any one of [21] to [25].

[27] A sintered sheet obtained by sintering at least a particle (S) being the core-shell type polymer solid product according to [1], [4], [5], or [6] (provided that "a center (x) of the solid product" in the requirement (I) is replaced by "a center (x) of the particle (S)").
[28] The sintered sheet according to [27], wherein the particle (S) has an average particle diameter of 150 μm or less.
[29] A filtration filter, a humidifying element, or an ink absorber for a printer, comprising the sintered sheet according to [27] or [28].
[30] A gradient type polymer solid product comprising a graft copolymer (C) having: a main chain portion derived from a precursor polymer (A); and a graft portion derived from a polymer (B) different from the polymer (A), wherein, in infrared absorption spectroscopic measurement of a section passing through a center (x) of the solid product, a point (z) on a surface where a distance between the center (x) and the surface is shortest, and a middle point (y) of a line connecting the center (x) and the point (z), absorbance (Abs) at the center (x), at the middle point (y), and at the point (z) satisfy the following relationship.

$$X \geq 0.01,$$

$$Y \geq 0.01,$$

$$Z \geq 0.01;$$

and

$$X < Y < Z$$

wherein

X represents a value of Abs (key band of polymer (B))/Abs (key band of polymer (A)) at the center (x),
Y represents a value of Abs (key band of polymer (B))/Abs (key band of polymer (A)) at the middle point (y), and
Z represents a value of Abs (key band of polymer (B))/Abs (key band of polymer (A)) at the point (z).

[31] The gradient type polymer solid product according to [30], being a particle having an average particle diameter of 0.0001 mm to 1000 mm.
[32] The gradient type polymer solid product according to [30], being a molded article having an average thickness or diameter of 0.0001 mm to 50 mm.
[33] The gradient type polymer solid product according to any one of [30] to [32], wherein the precursor polymer (A) is a polymer obtained from one, or two or more α-olefins selected from α-olefins having 2 to 18 carbon atoms.
[34] The gradient type polymer solid product according to any one of [30] to [33], wherein the polymer (B) is a polymer of a monomer component comprising at least one monomer having an ethylenically unsaturated group and a polar functional group within a same molecule.
[35] The gradient type polymer solid product according to any one of [30] to [34], having a grafting rate (%) of 1% or more and 150% or less, the grafting rate represented by the following expression.

$$\text{Grafting rate (\%)} = [\text{mass of polymer (B)}/\text{mass of precursor polymer (A)}] \times 100$$

[36] A method for producing the gradient type polymer solid product according to any one of [30] to [35], the method comprising grafting the polymer (B) different from the polymer (A) to a solid product comprising the precursor polymer (A) with a shape of the solid product retained.
[37] The method for producing the gradient type polymer solid product according to [36], wherein the solid product comprising the precursor polymer (A) is a particle having an average particle diameter of 0.0001 mm to 1000 mm.

[38] The method for producing the gradient type polymer solid product according to [36], wherein the solid product comprising the precursor polymer (A) is a molded article having an average thickness or diameter of 0.0001 mm to 50 mm.

Advantageous Effects of Invention

According to the present invention, it is expected that by a core-shell type graft copolymer having a high proportion of various functional groups introduced only to the surface of the polymer, the features of a raw material polymer are exploited, and the affinity with other materials can be exhibited, which has been difficult by the raw material polymer as it is.

According to the present invention, it is expected that by a gradient type graft copolymer having a higher proportion of various functional groups near the surface of the polymer than in the central portion of the polymer, the features of a raw material polymer are exploited, and the affinity with other materials can be exhibited, which has been difficult by the raw material polymer as it is.

In addition, according to the present invention, by using a particle (S) having predetermined properties, a coating composition and an aqueous dispersion composition each having a good dispersibility into an aqueous coating and each capable of forming a film having excellent wear resistance and sliding properties; a curable resin composition with which a cured product having excellent wear resistance and sliding properties can be obtained and a sliding part using the curable resin composition; and a prepreg with which a fiber reinforced composite material having excellent interlayer fracture toughness and heat resistance can be obtained and a fiber reinforced composite material using the prepreg can be provided.

In addition, according to the present invention, by using a particle (S) having predetermined properties, a sintered sheet having high hydrophilicity and strength can be provided.

Brief Description of Drawing

Figure 1 is a schematic section view illustrating respective points in a polymer solid product.

Description of Embodiments

Hereinafter, the present invention will be described in detail.

[Polymer Solid Product]

The present invention relates to a core-shell type polymer solid product, and the solid product comprises a graft copolymer (C) having a main chain portion derived from a precursor polymer (A) and a graft portion derived from a polymer (B) different from the polymer (A), wherein a core portion (a) of the solid product comprises the main chain portion derived from the precursor polymer (A), a shell portion (b) of the solid product comprises the graft portion derived from the polymer (B), and the polymer solid product further satisfies the following requirement (I).

Requirement (I): In infrared absorption spectroscopic measurement of a section passing through a center (x) of the solid product, a point (z) on a surface where a distance between the center (x) and the surface is shortest, and a middle point (y) of a line connecting the center (x) and the point (z), absorbance (Abs) at the center (x), at the middle point (y), and at the point (z) satisfy the following relationship.

$$X < 0.01,$$

$$Y < 0.01,$$

and

$$Z \geq 0.01,$$

It is to be noted that the upper limit of Z is not particularly limited, and is usually 100, preferably 80, more preferably 50, and still more preferably 30.

In addition, the present invention also relates to a gradient type polymer solid product, and the solid product

comprises a graft copolymer (C) having a main chain portion derived from a precursor polymer (A) and a graft portion derived from a polymer (B) different from the polymer (A), and, for example, is a graft copolymer (C) obtained by grafting the polymer (B) different from the polymer (A) to the precursor polymer (A) with the shape of (A) retained. Herein, in infrared absorption spectroscopic measurement of a section passing through a center (x) of the solid product, a point (z) on a surface where a distance between the center (x) and the surface is shortest, and a middle point (y) of a line connecting the center (x) and the point (z), absorbance (Abs) at the point (x), at the middle point (y), and at the point (z) satisfy the following relationship.

$$X \geq 0.01,$$

$$Y \geq 0.01,$$

$$Z \geq 0.01,$$

and

$$X < Y < Z$$

It is to be noted that the upper limit of Z is not particularly limited, and is usually 100, preferably 80, more preferably 50, and still more preferably 30.

However, in the invention of the core-shell type and gradient type polymer solid products,
X represents a value of Abs (key band of polymer (B))/Abs (key band of polymer (A)) at the center (x),
Y represents a value of Abs (key band of polymer (B))/Abs (key band of polymer (A)) at the middle point (y), and
Z represents a value of Abs (key band of polymer (B))/Abs (key band of polymer (A)) at the point (z).

It is to be noted that Abs (key band of polymer (A)) means the absorbance at a key band of the polymer (A) and Abs (key band of polymer (B)) means the absorbance at a key band of the polymer (B). Details on the measurement conditions will be described in Examples.

The key band is selected from characteristic infrared absorption of functional groups of each polymer in the infrared absorption spectroscopic measurement. Characteristic infrared absorption can exist more than one for each polymer, but the key band is determined to be absorption the identification of which is easy in consideration of the combination of the polymer (A) and the polymer (B).

As the polymer (A), polyolefins can be used as will be described later, for example, the $CH_2$ bending vibration can be the key band for ethylene polymers, and the $CH_3$ bending vibration can be the key band for propylene polymers and ethylene/propylene copolymers. The $CH_3$ bending vibration can be the key band for propylene/butene copolymers (for example, Example F4 which will be described later), but in the case where an influence by the polymer (B) is considered, the $CH_2$ bending vibration can be selected as the key band (for example, Example F5 which will be described later). The $CH_3$ bending vibration can also be the key band for polymers using butene as the main component and polymers using 4-methylpenetene-1 as the main component.

Besides, for example, the $CH_2$ bending vibration can be used as the key band for cyclic olefin polymers, the $CH_3$ bending vibration of propylene can be used as the key band for EPDM, and a band characteristic of an aromatic ring can be used as the key band for aromatic olefin polymers.

As the polymer (A), polymers and the like other than polyolefins can also be used as will be described later. In that case, the key band is also selected from characteristic infrared absorption of each polymer. For example, key bands for polycarbonates include the C=O stretching vibration.

The polymer (B) is different from the polymer (A), as will be described later. The key band of the polymer (B) is selected from the characteristic infrared absorption of functional groups of each polymer, and, as described above, a key band the identification of which from the key band of the polymer (A) is easy is selected as described above.

Specific examples of the key band include the C=O stretching vibration for carboxyl group-containing polymers, the O-H stretching vibration for hydroxy group-containing polymers, the N-H stretching vibration for amines, and the C=O stretching vibration for amide group-containing polymers.

In addition, the center (x) of the polymer solid product means the center of gravity of the polymer solid product, and, for example, in the case of a particle (S), which will be described below, the center (x) of the particle (S) means the center of gravity of the particle (S). Figure 1 (a) is a section view illustrating the center (x), the middle point (y), and the point (z) in a pellet, and Figure 1(b) is a section view describing the respective points in a film.

The core-shell type polymer solid product according to the present invention is preferably in the form of a particle. Hereinafter, the core-shell type polymer solid product in the form of a particle is also referred to as a "particle (S)". That is, the particle (S) is a core-shell type polymer solid product comprising a graft copolymer (C) having a main chain portion derived from a precursor polymer (A) and a graft portion derived from a polymer (B) different from the polymer (A), and a core portion (a) of the solid product comprises the main chain portion derived from the precursor polymer (A) and a shell portion (b) of the solid product comprise the graft portion derived from the polymer (B) .

In this case, in the particle (S), the absorbance (Abs) at the center (x), at the middle point (y), and at the point (z) satisfy the relationship ($X < 0.01$, $Y < 0.01$, and $Z \geq 0.01$) in the infrared absorption spectroscopic measurement of a section passing through the center (x) of the particle (S), the point (z) on the surface where the distance between the center (x) and the surface is shortest, and the middle point (y) of the line connecting the center (x) and the point (z).

That is, the central portion of the particle (S) is constituted by the precursor polymer (A), and the graft portion exists at the surface portion of the particle (S). According to the production method which will be described later, a graft reaction occurs at the surface of the precursor polymer particle and the particle (S) the surface portion of which is grafted is formed.

When the surface portion of the particle is efficiently grafted, the particle (S) having an excellent dispersibility is thereby obtained. That is, when the particle (S) satisfies the requirement (I), an aqueous dispersion composition having an excellent dispersibility is thereby obtained. In addition, when the surface portion of the particle is efficiently grafted, interfacial adhesiveness between a curable resin (D), which will be described later, and the particle (S) is thereby improved, so that a curable resin composition having an excellent wear resistance is obtained and further, a sliding part using the curable resin composition is obtained. In addition, when the surface portion of the particle is efficiently grafted, interfacial adhesiveness between a thermosetting resin (H), which will be described later, and the particle (S) is thereby improved, so that a fiber reinforced composite material having an improved interfacial fracture toughness and a high heat resistance is obtained.

<Precursor Polymer (A)>

As the precursor polymer (A), a polyolefin can be used. As a polyolefin, for example, a polymer obtained from one, or two or more α-olefins selected from α-olefins having 2 to 18 carbon atoms is adopted. Examples of the polymer include homopolymers or copolymers of α-olefins such as ethylene, propylene, butene-1, pentene-1, 2-methylbutene-1, 3-methylbutene-1, hexene-1, 3-methylpentene-1, 4-methylpentene-1, 3,3-dimethylbutene-1, heptene-1, methylhexene-1, dimethylpentene-1, trimethylbutene-1, ethylpentene-1, octene-1, methylpentene-1, dimethylhexene-1, trimethylpentene-1, ethylhexene-1, methylethylpentene-1, diethylbutene-1, propylpentene-1, decene-1, methylnonene-1, dimethyloctene-1, trimethylheptene-1, ethyloctene-1, methylethylheptene-1, diethylhexene-1, dodecene-1, and hexadodecene-1.

Specific examples of the copolymers include ethylene/propylene random copolymers, ethylene/butene random copolymers, propylene/butene random copolymers, ethylene/propylene/butene random copolymers, random copolymers of 4-methylpentene-1 and propylene, random copolymers of 4-methylpentene-1 and hexene-1, random copolymers of 4-methylpentene-1 and decene-1, random copolymers of 4-methylpentene-1 and tetradecene, random copolymers of 4-methylpentene-1 and hexadecene-1, random copolymers of 4-methylpentene-1 and octadecene-1, and random copolymers of 4-methylpentene-1, hexadecene-1, and octadecene-1.

Among these, examples of preferred polymers include polymers using ethylene as the main component, polymers using propylene as the main component, polymers using butene as the main component, and polymers using 4-methylpentene-1 as the main component. Among these, polymers using ethylene as the main component are preferable.

It is to be noted that a polymer using a certain monomer as the main component refers to a polymer having a content of a constituent unit derived from the main component monomer of usually 60 mol% or more, and preferably 80 mol% or more in 100 mol% of the constituent units derived from all the monomers.

In addition, the polyolefin may be a polymer using a cyclic olefin, a nonconjugated diene, or an aromatic olefin as the main component, these olefins may be used singly, or two or more thereof may be used, and the content of the constituent units derived from olefins each being a comonomer is usually 50 mol% or less, preferably 40 mol% or less, and still more preferably 30 mol% or less.

In the present invention, homopolymers or copolymers of tetracyclododecene, norbornene, and styrene in addition to ethylene, propylene, butene-1, 4-methylpentene-1, 3-methylbutene-1, hexene-1, octene-1, and the like can be preferably used.

Ethylene-propylene-nonconjugated diene copolymer rubber (EPDM) and the like using, as an olefin other than those described above, a nonconjugated diene such as, for example, 5-ethylidenenorbornene, 5-methylnorbornene, 5-vinylnorbornene, dicyclopentadiene, and 1,4-pentadiene can also be used suitably.

The polyolefin can be used singly, or two or more thereof can be used in combination.

In addition, with respect to these polyolefins, both of the isotactic structure and the syndiotactic structure can

be used, and there is no particular limitation to stereo regularity.

Examples of the precursor polymer (A) include ethylene/polar group-containing vinyl copolymers, polystyrenes, polyamides, acrylic resins, polyphenylene sulfide resins, polyether ether ketone resins, polyester resins, polysulfones, polyphenylene oxides, polyimides, polyetherimides, polycarbonates, acrylonitrile/butadiene/styrene copolymers (ABS), conjugated diene-based rubber, styrene rubber, phenol resins, melamine resins, silicone resins, and epoxy resins in addition to the polyolefins. These resins can be contained singly, or two or more thereof can be contained, styrene-based rubber is preferable, and specific examples thereof include styrene/butadiene/styrene-based SBS rubber, styrene/butadiene/butylene/styrene-based SBBS rubber, and styrene/ethylene/butylene/styrene-based SEBS rubber.

The precursor polymer (A) may have a particle shape, such as a powder or a pellet, in addition, a shape of a film, a sheet, a fiber, a nonwoven fabric, or the like, and may be a sintered body of a particle, such as the powder or the pellet, and polymers having shapes obtained from various types of molding can be used.

As the precursor polymer (A), a polymer having a particle shape can be used and preferably has an average particle diameter of 150 $\mu$m or less. More preferably, the average particle diameter is similar to the average particle diameter of the particle (S), which will be described later.

It is to be noted that in the present specification, a polymer obtained from one, or two or more $\alpha$-olefins selected from $\alpha$-olefins having 2 to 18 carbon atoms is sometimes referred to as a "polyolefin resin" or simply referred to as a "polyolefin."

In the precursor polymer (A), a known material can be arbitrarily contained as long as the material does not change the peculiar characteristics of the precursor polymer (A). In that case, the amount of the known material to be blended is usually 20% by mass or less, and preferably 10% by mass or less.

<Polymer (B)>

The polymer (B) can be used in a range where the effects of the present invention are exhibited without any particular limitation as long as the polymer (B) is different from the precursor polymer (A)

For example, the graft copolymer (C) may be obtained by introducing the polymer (B) to the precursor polymer (A), or the graft copolymer (C) may be obtained by introducing the polymer (B) through a method of polymerizing a monomer (b) for the polymer (B) in the presence of the precursor polymer (A). Examples of one preferred aspect among them include the graft copolymer (C) which is obtained when the polymer (B) is formed by subjecting a monomer (b1) having an ethylenically unsaturated group and a polar functional group within the same molecule to graft polymerization at the surface of the precursor polymer (A).

Hereinafter, a monomer that can form the polymer (B) through polymerization is sometimes referred to as a "monomer (b1)." Suitable examples of the polymer (B) include a polymer of the monomer (b1) having an ethylenically unsaturated group and a polar functional group within the same molecule. By using such a monomer (b1), hydrophilicity can be imparted to the graft copolymer (C), and a sintered sheet having an excellent hydrophilicity can be easily obtained as will be described later.

Examples of the monomer (bl) having an ethylenically unsaturated group and a polar functional group within the same molecule include hydroxy group-containing ethylenically unsaturated compounds, amino group-containing ethylenically unsaturated compounds, epoxy group-containing ethylenically unsaturated compounds, nitrogen-containing aromatic vinyl compounds, lactam structure-containing ethylenically unsaturated compounds, unsaturated carboxylic acids and derivatives thereof, vinyl ester compounds, nitrile group-containing unsaturated compounds, vinyl chloride, and vinyl silane compounds. These can be used singly, or two or more thereof can be used in combination.

A hydroxy group and an epoxy group are preferable as the polar functional group from the viewpoint of hydrophilicity, for example, in the case where a sintered sheet, which will be described later, is produced.

Examples of the hydroxy group-containing ethylenically unsaturated compounds include: (meth)acrylic esters such as hydroxyethyl (meth)acrylate, 2-hydroxypropyl (meth)acrylate, 3-hydroxypropyl (meth)acrylate, 2-hydroxy-3-phenoxy-propyl (meth)acrylate, 3-chloro-2-hydroxypropyl (meth)acrylate, glycerin mono(meth)acrylate, pentaerythritol mono(meth)acrylate, trimethylolpropane mono(meth)acrylate, tetramethylolethane mono(meth)acrylate, butanediol mono(meth)acrylate, polyethylene glycol mono(meth)acrylate, and 2-(6-hydroxyhexanoyloxy) ethyl acrylate; and 10-undecene-1-ol, 1-octene-3-ol, 2-methanol norbornene, hydroxystyrene, hydroxyethyl vinyl ether, hydroxybutyl vinyl ether, N-methylolacrylamide, 2-(meth)acryloyloxy ethyl acid phosphate, glycerin monoallyl ether, allyl alcohol, allyloxy ethanol, 2-butene-1,4-diol, and glycerin monoalcohol. Among these, hydroxyethyl (meth)acrylate and 2-hydroxypropyl (meth)acrylate are preferable.

The amino group-containing ethylenically unsaturated compound is a compound having an ethylenically double bond and an amino group, and examples of such a compound include a vinyl-based monomer having at least one kind of an amino group and a substituted amino group, represented by the following formula.

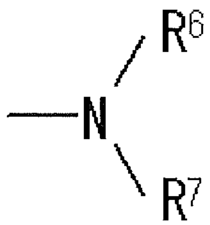

wherein $R^6$ represents a hydrogen atom, a methyl group, or an ethyl group, $R^7$ represents a hydrogen atom, an alkyl group having 1 to 12 carbon atoms, preferably 1 to 8 carbon atoms, or a cycloalkyl group having 6 to 12 carbon atoms, preferably 6 to 8 carbon atoms. It is to be noted that the alkyl group or the cycloalkyl group may further contain a substituent.

Examples of the amino group-containing ethylenically unsaturated compounds include: (meth)acrylic acid alkyl ester-based derivatives such as aminoethyl (meth)acrylate, propylaminoethyl (meth)acrylate, 2-(dimethylamino)ethyl methacrylate, aminopropyl (meth)acrylate, phenylaminoethyl methacrylate, and cyclohexylaminoethyl methacrylate; vinylamine-based derivatives such as N-vinyldiethylamine and N-acetylvinylamine; allylamine-based derivatives such as allylamine, methacrylamine, and N-methyl(meth)acrylamine; acrylamide-based derivatives such as (meth)acrylamide, N-methyl(meth)acrylamide, N,N-dimethyl(meth)acrylamide, and N,N-dimethylaminopropyl(meth)acrylamide; aminostyrenes such as p-aminostyrene; and 6-aminohexyl succinimide, and 2-aminoethyl succinimide. Among these, aminoethyl (meth)acrylate, propylaminoethyl (meth)acrylate, (meth)acrylamide and N,N-dimethyl(meth)acrylamide are preferable.

The epoxy group-containing ethylenically unsaturated compound is a monomer having at least one polymerizable unsaturated bond and at least one epoxy group in one molecule. Example of the epoxy group-containing ethylenically unsaturated compounds include: glycidyl (meth)acrylate; dicarboxylic acid mono and alkylglycidyl esters (the number of carbon atoms of the alkyl group is 1 to 12 in the case of a monoglycidyl ester) such as maleic acid mono- and di-glycidyl esters, fumaric acid mono- and di-glycidyl esters, crotonic acid mono- and di-glycidyl esters, tetrahydrophthalic acid mono- and di-glycidyl esters, itaconic acid mono- and di-glycidyl esters, butenetricarboxylic acid mono- and di-glycidyl esters, citraconic acid mono- and di-glycidyl esters, endo-cis-bicyclo[2.2.1]hept-5-ene-2,3-dicarboxylic acid (nadic acid™) mono- and di-glycidyl esters, endo-cis-bicyclo[2.2.1]hept-5-ene-2-methyl-2,3-dicarboxylic acid (methylnadic acid™) mono- and di-glycidyl esters, and allylsuccinic acid mono- and di-glycidyl esters; and p-styrenecarboxylic acid alkylglycidyl esters, allyl glycidyl ether, 2-methylallyl glycidyl ether, styrene-p-glycidyl ether, 3,4-epoxy-1-butene, 3,4-epoxy-3-methyl-1-butene, 3,4-epoxy-1-pentene, 3,4-epoxy-3-methyl-1-pentene, 5,6-epoxy-1-hexene, and vinylcyclohexene monoxide. Among these, glycidyl (meth)acrylate and allyl glycidyl ether are preferable.

Examples of the nitrogen-containing aromatic vinyl compounds include 4-vinylpyridine, 2-vinylpyridine, 5-ethyl-2-vinylpyridine, 2-methyl-5-vinylpyridine, 2-isopropenylpyridine, 2-vinylquinoline, 3-vinylisoquinoline, and N-vinylcarbazole.

Examples of the lactam structure-containing ethylenically unsaturated compounds include N-vinylpyrrolidone.

Examples of the unsaturated carboxylic acids include various unsaturated carboxylic acids such as (meth)acrylic acid, maleic acid, nadic acid, fumaric acid, tetrahydrophthalic acid, itaconic acid, citraconic acid, crotonic acid, isocrotonic acid, norbornene dicarboxylic acid, and bicyclo[2.2.1]hept-2-ene-5,6-dicarboxylic acid.

Examples of the derivatives of the unsaturated carboxylic acids include derivatives having a structure of -C(=O)-X (X represents an atom selected from 15 to 17th group elements), such as acid anhydrides, acid halides, amides, imides, and esters (e.g., alkyl esters) of the unsaturated carboxylic acids, and specific examples thereof include malenyl chloride, malenyl imide, maleic anhydride, itaconic anhydride, citraconic anhydride, tetrahydrophthalic anhydride, bicyclo[2.2.1]hept-2-ene-5,6-dicarboxylic anhydride, dimethyl maleate, monomethyl maleate, diethyl maleate, diethyl fumarate, dimethyl itaconate, diethyl citraconate, dimethyl tetrahydrophthalate, dimethyl bicyclo[2.2.1]hept-2-ene-5,6-dicarboxylate, methyl (meth)acrylate, ethyl (meth)acrylate, propyl (meth)acrylate, butyl (meth)acrylate, 2-ethylhexyl (meth)acrylate, stearyl (meth)acrylate, (meth)acryloyl chloride, (meth)acrylamide, malenyl imide, and tetrahydrofurfuryl (meth)acrylate.

Among the unsaturated carboxylic acids and the derivatives thereof, (meth)acrylic acid, methyl (meth)acrylate, ethyl (meth)acrylate, (meth)acrylamide, maleic anhydride, and tetrahydrofurfuryl (meth)acrylate are preferable. Among these, (meth)acrylic acid, maleic anhydride, methyl (meth)acrylate, ethyl (meth)acrylate, and tetrahydrofurfuryl (meth)acrylate are particularly preferable.

Examples of the vinyl ester compounds include vinyl acetate, vinyl propionate, vinyl n-butyrate, vinyl isobutyrate, vinyl pivalate, vinyl caproate, vinyl versatate, vinyl laurate, vinyl stearate, vinyl benzoate, vinyl p-(t-butyl)benzoate, vinyl salicylate, and vinyl cyclohexanecarboxylate.

Examples of the nitrile group-containing unsaturated compounds include (meth)acrylonitrile, fumaronitrile, allyl cyanide, and cyanoethyl acrylate, and among these, (meth)acrylonitrile is preferable.

It is to be noted that hereinafter in the present specification, the monomer (b1) having an ethylenically unsaturated

group and a polar functional group within the same molecule is sometimes referred to as the "graft monomer (b1)" or sometimes simply referred to as the "monomer (b1)."

The grafting rate (specifically, grafting rate of grafted monomer (b)) in the graft polymer (C) and the particle (S) is usually 1% or more, preferably 3% or more, more preferably 5% or more, and still more preferably 8% or more. The upper limit of the grafting rate does not exist; however, there is a tendency that even when grafting is performed at a grafting rate exceeding 150%, effects commensurate with the grafting rate are not obtained and, on the other hand, the shape becomes deteriorated or other problems occur, and therefore the grafting rate is preferably 150% or less, more preferably 100% or less, and still more preferably 50% or less.

In the case where two or more of the monomers (b) are used, the total grafting rate of these monomers is preferably 1% or more, the total grafting rate of these monomers is preferably 3% or more, more preferably 5% or more, and still more preferably 8% or more.

The grafting rate is represented by the following expression.

$$\text{Grafting rate (\%)} = [\text{mass of polymer (B)}/\text{mass of precursor polymer (A)}] \times 100$$

The graft copolymer (C) may further comprise, in addition to the monomer (b1) having an ethylenically unsaturated group and a polar functional group within a same molecule, a monomer (hereinafter, also referred to as "monomer (b2)") having an ethylenically unsaturated group, the monomer other than the monomer (b1), in a state in which the monomer is grafted. In this aspect, the graft copolymer (C) has a structure in which a repeating unit derived from the monomer (b1) and a repeating unit derived from the monomer (b2) are introduced to the precursor polymer (A).

Examples of the monomer (b2) that can be grafted arbitrarily and additionally to the precursor polymer (A) include aromatic vinyl compounds other than the nitrogen-containing aromatic vinyl compounds, and a compound represented by the following formula is given as an example.

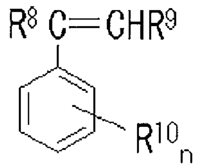

wherein $R^8$ and $R^9$ may be the same or different from each other, each represent a hydrogen atom or an alkyl group having 1 to 3 carbon atoms, and specific examples thereof include a methyl group, an ethyl group, a propyl group, and an isopropyl group. In addition, $R^{10}$ each independently represent a hydrocarbon group having 1 to 3 carbon atoms or a halogen atom, and specific examples thereof include a methyl group, an ethyl group, a propyl group, an isopropyl group, and a chlorine atom, a bromine atom, and an iodine atom. In addition, n usually represents an integer of 0 to 5, and preferably represents an integer of 1 to 5.

Specific examples of such aromatic vinyl compounds include styrene, α-methylstyrene, o-methylstyrene, p-methylstyrene, m-methylstyrene, p-chlorostyrene, m-chlorostyrene, and p-chloromethylstyrene, and among these, styrene is preferable.

<Graft Copolymer (C)>

The graft copolymer (C) has the main chain portion derived from the precursor polymer (A) and the graft portion derived from the polymer (B). According to the type of the monomer (b) to be grafted to the precursor polymer (A) and the grafting rate, the graft copolymer (C) can improve the drawback that the affinity of the precursor polymer (A) as it is with other materials has been low.

In addition, any of the graft copolymer (C) and the precursor polymer (A) which is a precursor of the graft copolymer (C) is a solid product having a constant shape but may have any shape. Examples of the solid product having a constant shape include a particle, a particulate, a pellet, a chip, a granule, a bead, a fiber piece, a nonwoven fabric piece, a film piece, and a sheet piece. The solid product may have one of the shapes, or solid products having a plurality of shapes may be mixed.

In addition, the solid product containing the graft copolymer (C) and/or the precursor polymer (A) for the graft

copolymer (C) has an average particle diameter of usually 0.0001 mm or more and 1000 mm or less, preferably 0.0001 mm or more and 800 mm or less, more preferably 0.0001 mm or more and 100 mm or less, still more preferably 0.0001 mm or more and 10 mm or less, even still more preferably 0.001 mm or more and 2.5 mm or less, especially preferably 0.005 mm or more and 1.5 mm or less, and particularly preferably 0.01 mm or more and 0.7 mm or less.

As a method of measuring the average particle diameter, a classification method using a sieve, a natural sedimentation method, a centrifugation precipitation method, a Coulter method (Coulter principle), a dynamic light scattering method, an image analysis method, a laser light diffraction scattering method, and an ultracentrifugation precipitation method, and the like are known, and an arbitrary measurement method can be used according to the shape of a sample and the purpose. In the case where a sample has a particle shape in the present invention, the average particle diameter can be determined, for example, by the Coulter method (Coulter principle) or the laser light diffraction scattering method (in the case of an average particle diameter of less than 1 mm), or the classification method using a sieve (in the case of an average particle diameter of 1 mm or more) or an optical microscope (in the case of an average particle diameter of 1 mm or more). In addition, in the case where a sample has a shape of a film, a sheet, a fiber, a nonwoven fabric, the thickness measured by a thickness meter may be used, or the thickness may be determined by observation of a section with an optical microscope. In the case of a particulate, the average particle diameter can be determined through image analysis of a photo taken with a microscope. When the precursor polymer (A) to be the core portion (a) has the above-described average particle diameter, the workability in handling when the graft copolymer (C) is molded or mixed with other materials thereby becomes satisfactory.

In one aspect, the particle (S) has an average particle diameter of usually 150 $\mu$m or less, preferably 100 $\mu$m or less, more preferably 60 $\mu$m or less, and particularly preferably 40 $\mu$m or less. The preferred lower limit of the average particle diameter is 1 $\mu$m, and more preferably 5 pm. As a method of measuring the average particle diameter, a Coulter method (Coulter principle) can be used.

In the case where the solid product containing the graft copolymer (C) and/or the precursor polymer (A) for the graft copolymer (C) is a molded article, the solid product has an average thickness or diameter of usually 0.0001 mm or more and 50 mm or less, preferably 0.0001 mm or more and 10 mm or less, more preferably 0.001 mm or more and 2.5 mm or less, still more preferably 0.005 mm or more and 1.5 mm or less, and particularly preferably 0.01 mm or more and 0.7 mm or less. As a molding method, all the known methods can be used. Specifically, the molded article can be produced by injection molding, blow molding, press molding, calender molding, extrusion molding, stamping molding, and the like. A sheet or a film (unstretched), a pipe, a tube, an electric wire, and the like can be molded by extrusion molding. Particularly, the injection molding method, the press molding method, and the extrusion molding method are preferable.

A stretched film can also be produced using an extruded sheet or an extruded film (unstretched) as described above as a film roll by, for example, a tenter method (longitudinal/lateral stretching, lateral/longitudinal stretching), a simultaneous biaxial stretching method, and an uniaxial stretching method, or through inflation film molding.

Examples of the fiber include a polyolefin fiber, a wholly aromatic polyamide fiber, an aliphatic polyamide fiber, a polyester fiber, a cellulose fiber, and a carbon fiber. Examples thereof further include a fiber obtained by subjecting a plant to a decomposition treatment into the form of a fiber.

<Method for Producing Solid Product Containing Graft Copolymer (C)>

The production method for obtaining a polymer solid product comprising the above-described graft copolymer (C) is not particularly limited as long as the resultant polymer solid product comprising the graft copolymer (C) satisfies the above-described requirement. For example, the polymer (B) is grafted to the solid product containing the precursor polymer (A) with the shape of the solid product retained.

However, examples of a suitable production method for obtaining the polymer solid product comprising the graft copolymer (C) include, as disclosed in Patent Literature 2 and Non Patent Literatures 1 and 2, graft polymerization to a polymer utilizing an initiator which is a peroxide obtained by reacting an alkylboron and oxygen.

Examples of a solvent for use in the graft reaction include: water; aromatic hydrocarbon-based solvents such as benzene, toluene, and xylene; aliphatic hydrocarbon-based solvents such as pentane, hexane, heptane, octane, nonane, and decane; alicyclic hydrocarbon-based solvents such as cyclohexane, methylcyclohexane, and decahydronaphthalene; chlorinated hydrocarbon-based solvents such as chlorobenzene, dichlorobenzene, trichlorobenzene, methylene chloride, chloroform, carbon tetrachloride, and tetrachloroethylene; ketones such as 1-methyl-2-pyrrolidone, ethylene carbonate, propylene carbonate, $\gamma$-butyrolactone, N-methyl-2-pyrrolidone, propylene glycol monomethyl ether acetate, tributyl acetylcitrate, 2,4-pentadiene, dimethyl sulfoxide, n-alkyl adipate, 2,2,4-trimethyl-1,3-pentanediol diisobutyrate, 3-methoxy-3-methyl-1-butylacetate, acetone, methyl ethyl ketone, methyl isobutyl ketone, acetophenone, benzophenone, and cyclohexanone; alcohols such as benzyl alcohol, 1-butanol, 2-butanol, t-butanol, 1-pentanol, 2-pentanol, 3-pentanol, 2-ethyl-1-hexanol, normal propyl alcohol, isopropyl alcohol, ethanol, and methanol; ethers such as ethyl ether, ethylene glycol monomethyl ether, anisole, phenyl ether, dioxane, and tetrahydrofuran; and esters such as ethyl

acetate and butyl acetate. Among these, water is preferable.

The solvents can be used singly, or two or more thereof can be used in combination.

In addition, a method and a sequence of contacting the precursor polymer (A), the monomer (b), and the alkylboron with one another in the production method is not particularly limited, and various methods can be adopted. In addition, the precursor polymer (A) may be preliminarily impregnated with the monomer (b) or the alkylboron. Further, a known chain transfer agent can be used together in order to adjust the molecular weight of the graft polymer (B).

For example, when the precursor polymer (A) is preliminarily impregnated with the alkylboron, it becomes easy to obtain a gradient type polymer. In addition, when the amount of the monomer (b) relative to the precursor polymer (A) is large, the penetrability of the monomer (b) into the precursor polymer (A) is enhanced without the preliminary impregnation with the alkylboron, and therefore modification progresses inside to make it easy to obtain a gradient type polymer.

On the other hand, with respect to the sequence of the contact with oxygen, a method in which the contact with oxygen is performed after charging the alkylboron is preferable because the alkylboron becomes the starting point of the reaction. In addition, the monomer (b) to be used is preferably subjected to nitrogen gas feeding treatment in advance to purge residual oxygen sufficiently.

In addition, various additives such as known additives can be used together in the graft reaction within a range not interfering with the objects of the present invention, and examples of the known additives include: antioxidants such as hindered phenol compounds; process stabilizers; heat stabilizers; anti-heat-aging agents; weathering stabilizers; anti-static agents; slip preventing agents; antiblocking agents; anticlouding agents; lubricants; pigments; dyes; nucleating agents; plasticizers; hydrochloric acid absorbing agents; flame retardants; blooming inhibitors; radical scavengers represented by nitroxy radicals such as piperidines; known softening agents; tackifiers; processing aids; an adhesiveness imparting agents; and fillers such as a carbon fiber, a glass fiber and a whisker. In addition, a small amount of another high molecular weight compound can be blended within a range not deviating from the scope of the present invention.

As an apparatus for use in the graft reaction as described above, any of apparatuses with which mixing and heating can be performed can be used without any particular limitation. For example, any of vertical type reactors and horizontal type reactors can be used. Specific examples of the reactors include a fluidized bed, a moving bed, a loop reactor, a horizontal reactor with a stirring blade, a vertical reactor with a stirring blade, and a rotary drum. In addition, a multi-screw/rotation-revolution type mixer such as a planetary mixer, a kneader, a puddle drier, a Henschel mixer, a static mixer, a V blender, a tumbler, a Nauta mixer can also be used.

The properties defined in the present invention can be obtained by washing the graft copolymer (C) with a solvent which can dissolve the unreacted monomer (b1) having an ethylenically unsaturated group and a polar functional group within the same molecule, or a homopolymer. Examples of such a solvent include: water; aliphatic hydrocarbons such as hexane, heptane, decane, and cyclohexane; aromatic hydrocarbons such as benzene, toluene, and xylene; ketones such as acetone, methyl ethyl ketone, methyl isobutyl ketone, acetophenone, benzophenone, and cyclohexanone; alcohols such as benzyl alcohol, 1-butanol, 2-butanol, t-butanol, 1-pentanol, 2-pentanol, 3-pentanol, 2-ethyl-1-hexanol, normal propyl alcohol, isopropyl alcohol, ethanol, and methanol; ethers such as ethyl ether, ethylene glycol monomethyl ether, anisole, phenyl ether, dioxane, and tetrahydrofuran; esters such as ethyl acetate and butyl acetate; and mixed solvents consisting of two or more of these solvents. Ketones and alcohols are preferable, and acetone and methanol are particularly preferable.

In addition, the washing temperature can be a temperature equal to or higher than room temperature as long as the form of the graft copolymer (C) after the graft reaction is maintained; however, the washing temperature is preferably room temperature to 110°C, more preferably 40 to 100°C, and still more preferably 50 to 80°C. In the case where the washing temperature is set to be higher than the boiling point of a washing solvent at the pressure of the atmosphere, washing is preferably performed in a sealed condition in order to prevent the volatilization of the washing solvent.

If necessary, a carboxyl group which may be contained in the graft copolymer (C) may be neutralized with a neutralizing agent. Examples of the neutralizing agent include ammonia, monomethylamine, monoethylamine, dimethylamine, trimethylamine, triethylamine, ethyldimethylamine, sodium hydroxide, and potassium hydroxide.

## <Uses of Core-Shell Type or Gradient Type Polymer Solid Product>

The core-shell type or gradient type polymer solid product according to the present invention are suitable for uses such as, for example, a compatibilizer or a modifier for various polymer alloys, an adhesive, varnish, an aqueous dispersion, a viscosity modifier for liquids, and a coating material including a powder coating, and the like.

### <<Compatibilizer and Modifier for Various Polymer Alloys>>

In the case where the core-shell type or gradient type polymer solid product according to the present invention

is used as a compatibilizer or a modifier for various polymer alloys, the core-shell type or the gradient type polymer solid product is suitably used as a compatibilizer or a modifier for various polymer alloys the target of which includes: (1) various types of engineering plastics such as polystyrenes, ethylene/vinyl alcohol copolymers, ionomer resins, polyurethanes, polyamides, polyesters, polyphenylene ethers, polycarbonates, polyacetals, polyphenylene sulfides, polysulfones, polyether ketones, polyether ether ketones, and polyimides; (2) various polyolefins described in the section of <Precursor Polymer (A)>; and (3) various elastomers such as nitrile rubber, butadiene rubber, chloroprene rubber, butyl rubber, isoprene rubber, styrene-isoprene-styrene block copolymers, styrene/butadiene/styrene block copolymers, and hydrogenated styrene/butadiene/styrene block copolymers. In addition, the core-shell type or gradient type polymer solid product according to the present invention is also suitably used as a compatibilizer, a modifier, or the like in a reinforced resin composed of at least one selected from these (1) to (3) and at least one selected from the above-described fillers such as a carbon fiber and a glass fiber.

As methods for molding these various polymer alloys, all the known methods can be used. Specifically, these various polymer alloys can be produced by air-cooling inflation molding, air cooling two-step cooling inflation molding, high-speed inflation molding, T-die film molding, water cooling inflation molding, pipe molding, profile extrusion, extrusion of wire coating, a filament, or the like, injection molding, blow molding, press molding, stamping molding, calender molding, or the like.

molded bodies obtained by these methods can be used for wide uses ranging from house hold articles such as daily necessaries and recreation uses to general industrial uses and industrial products. Examples of the uses include home electric appliance material parts, communication equipment parts, electric parts, electronic parts, automobile parts, parts for other vehicles, ships, airplane materials, machine and mechanism parts, building material related members, civil engineering members, agricultural materials, electric power tools, food containers, films, sheets, and fibers.

Examples of the automobile parts include a front door, a wheel cap, a gasoline tank, a seat (filling, face side fabric, and the like), a belt, a roof lining, a compatible top, an arm rest, a door trim, a rear package tray, a carpet, a mat, a sun visor, a wheel cover, a tire, a mattress cover, an air bag, an insulation material, a hand strap, a hand strap belt, a wire coating material, an electric insulation material, a coating, a coating material, a top layer material, a floor material, a corner wall, a deck panel, covers, plywood, a ceiling board, a partition board, a side wall, a carpet, wall paper, a wall material, an exterior material, an interior material, a roof material, an acoustical insulation board, a heat insulation board, and a window material.

Examples of the home electric appliance material parts, the communication equipment parts, the electric parts, and the electronic parts include: office/OA equipment such as a printer, a personal computer, a word processor, a key board, PDA (portable information terminal devices), a headphone stereo, a cellular phone, a telephone, facsimile equipment, a copying machine, an ECR (electronic cash register), an electronic calculator, an electronic notebook, an electronic dictionary, a card, a holder, and stationery; home electric equipment such as a washing machine, a refrigerator, a vacuum cleaner, a microwave oven, lighting equipment, a game machine, an iron, and a kotatsu; AV equipment such as a TV, a VTR, a video camera, a radio-cassette recorder, a tape recorder, a MiniDisk, a CD player, a speaker, and a liquid crystal display; and a connector, a relay, a capacitor, a switch, a printed wiring board, a coil bobbin, a semiconductor sealing material, an electric wire, a cable, a transformer, a defecting yoke, a distribution board, and a timepiece.

Examples of the house hold articles include daily commodities/sporting goods such as clothes, a curtain, a bed sheet, plywood, a synthetic fiber board, a carpet, a doormat, a sheet, a bucket, a hose, a container, eye glasses, a bag, a case, goggles, ski plates, a racket, a tent, and a musical instrument.

<<Adhesive and Adhesion Layer of Laminated Body>>

In the case where the core-shell type or gradient type polymer solid product according to the present invention is used as an adhesive, the core-shell type or gradient type polymer solid product has high adhesive properties to various substances including various types of engineering plastics such as polystyrenes, ethylene/vinyl alcohol copolymers, ionomer resins, polyurethanes, polyamides, polyesters, polyphenylene ethers, polycarbonates, polyacetals, polyphenylene sulfides, polysulfones, polyether ketones, polyether ether ketones and polyimides; the compatibilizers and the modifiers for polymer alloys the target of which includes various polyolefins described in the section of <Precursor Polymer (A)>; resins such as various elastomers including nitrile rubber, butadiene rubber, chloroprene rubber, butyl rubber, isoprene rubber, styrene-isoprene-styrene block copolymers, styrene-butadiene-styrene block copolymers, hydrogenated styrene-butadiene-styrene block copolymers, and the like; metals such as aluminum, iron, nickel, and copper; paper; plain cloth of cotton or a chemical fiber; and the like.

The core-shell type or gradient type polymer solid product according to the present invention, when used herein as an adhesive, may be used singly but is more preferably used as a thermoplastic resin composition comprising the core-shell type or gradient type polymer solid product and an unmodified resin. In this case, as the unmodified resin, the polyolefins described in the section of <Precursor Polymer (A)> are suitably used. In addition, the thermoplastic resin composition may comprise known additives, such as an antioxidant, a weathering stabilizer, an antistatic agent, an

ultraviolet absorber, a crystal nucleating agent, a flame retardant, and a foaming agent, as additional components.

Such a thermoplastic resin composition comprising the core-shell type or gradient type polymer solid product and an unmodified resin can be produced utilizing a known method and can be produced, for example, by any of the following methods

(1) A method of mechanically blending the unmodified resin, the core-shell type or gradient type polymer solid product according to the present invention, and an additional component which is added if desired using an extruder, a kneader, or the like.

(2) A method of dissolving the unmodified resin, the core-shell type or gradient type polymer solid product according to the present invention, and an additional component which is added if desired in an appropriate good solvent (for example; hydrocarbon solvent such as hexane, heptane, decane, cyclohexane, benzene, toluene, and xylene) and subsequently removing the solvent.

(3) A method of preparing solutions each obtained by separately dissolving the unmodified resin, the core-shell type or gradient type polymer solid product according to the present invention, and an additional component which is added if desired in an appropriate good solvent, thereafter mixing the solutions, and subsequently removing the solvent.

(4) A method which is performed by combining the methods of the above (1) to (3).

In the case where the core-shell type or gradient type polymer according to the present invention is used as an adhesion layer of a laminated body, the laminated body is preferably provided with a layer (hereinafter, also referred to as "base material") made of a polyolefin resin, preferably the polyolefin described in the section of <Precursor Polymer (A)>, the adhesion layer, and a layer made of a polar resin in the mentioned order.

In addition, the core-shell type or gradient type polymer solid product according to the present invention, when used as an adhesion layer of a laminated body, may be used singly but is more preferably used as a thermoplastic resin composition comprising the core-shell type or gradient type polymer solid product and an unmodified resin. In this case, as the unmodified resin, the polyolefins described in the section of <Precursor Polymer (A)> are suitably used. In addition, the thermoplastic resin composition may comprise known additives, such as an antioxidant, a weathering stabilizer, an antistatic agent, an ultraviolet absorber, a crystal nucleating agent, a flame retardant, and a foaming agent, as additional components.

Such a thermoplastic resin composition comprising the core-shell type or gradient type polymer solid product and an unmodified resin can be produced, for example, by a known method as described in the above (1) to (4).

The base material is usually in the form of a sheet or in the form of a film.

The thickness of the base material can be appropriately selected according to the material, shape, use, and the like of the base material, and is preferably 0.01 mm or more and more preferably 0.03 mm or more in order to keep the rigidity as a base material. However, the thickness of the base material is preferably 10 mm or less and more preferably 2 mm or less from the viewpoint of easiness of handling, and the like.

The thickness of the adhesion layer comprising an adhesive according to the present invention is preferably 0.001 mm or more and more preferably 0.003 mm or more in order to obtain the function of adhesion sufficiently. However, the thickness of the adhesion layer is preferably 0.3 mm or less and more preferably 0.1 mm or less because when the thickness is excessively thick, there is no change in the effects but the cost increases.

In the layer made of a polar resin, examples of the polar resin include: ethylene/vinyl alcohol copolymers (EVOH); polyamides such as polyamide-6, polyamide-66, and polyamide 6T; and polyesters such as polyethylene terephthalate and polybutylene terephthalate.

The thickness of the layer made of a polar resin is preferably 0.001 mm or more and more preferably 0.003 mm or more. The thickness of the layer made of a polar resin is preferably 0.3 mm or less and more preferably 0.1 mm or less.

The method for producing such a laminated body is not particularly limited, and conventionally known methods can be used. The laminated body is obtained, for example, by a coextrusion injection method or a thermal lamination method. The shape of the resultant laminated body is not particularly limited, and examples thereof include the shapes of a bottle, a cup, a tube, and a sheet.

Examples of the specific uses of these laminated bodies include bottles for shampoo, a detergent, or the like, bottles for a seasoning such as cooking oil or soy sauce, bottles for a beverage such as mineral water or juice, heat-resistant food containers such as a lunch box and a bowl for a savory steamed egg custard with assorted ingredients, eating utensils such as a plate and chopsticks, other various food containers, specification bags, sugar packets, fried food packaging bags, drink packaging bags, various packaging films for food packaging (for high-temperature sterilization treatment), a retort pouch, or the like, packaging bags, and agricultural materials

<<Varnish and Aqueous Dispersion>>

• Varnish

In the case where the core-shell type or gradient type polymer solid product according to the present invention is used as varnish, the varnish contains the solid product and a solvent. Examples of the solvent include: aromatic hydrocarbon-based solvents such as benzene, toluene, and xylene; aliphatic hydrocarbon-based solvents such as pentane, hexane, heptane, octane, nonane, and decane; alicyclic hydrocarbon-based solvents such as cyclohexane, methylcyclohexane, and decahydronaphthalene; and chlorinated hydrocarbon-based solvents such as chlorobenzene, dichlorobenzene, trichlorobenzene, methylene chloride, chloroform, carbon tetrachloride, and tetrachloroethylene.
The solvents can be used singly, or two or more thereof can be used in combination.
The concentration of the solid in the varnish is usually 1 to 99% by mass and preferably 10 to 90% by mass.
In addition, if necessary, a solvent obtained by mixing an appropriate amount of a poor solvent in the above-described solvent can be used. Examples of the poor solvent include: alcohol-based solvents such as methanol, ethanol, n-propanol, iso-propanol, n-butanol, sec-butanol, and tert-butanol; ketone-based solvents such as acetone, methyl ethyl ketone, and methyl isobutyl ketone; ester-based solvents such as ether acetates and dimethyl phthalate; and ether-based solvents such as dimethyl ether, diethyl ether, di-n-amyl ether, tetrahydrofuran, and dioxyanisole. The amount of the poor solvent can be, for example, 0.1 to 100 parts by mass based on 100 parts by mass of a swelling solvent.

• Aqueous Dispersion

In the case where the core-shell type or gradient type polymer solid product according to the present invention is used as an aqueous dispersion, use of the core-shell type or gradient type graft copolymer (C) obtained by grafting a monomer having an ethylenically unsaturated group and a carboxyl group within the same molecule is particularly preferable, and the aqueous dispersion can be produced by a known method, for example, by a method of neutralizing the carboxyl group, if necessary, using a neutralizing agent to disperse the graft copolymer (C) in water. Examples of the neutralizing agent include ammonia, monomethylamine, monoethylamine, dimethylamine, trimethylamine, triethylamine, ethyldimethylamine, sodium hydroxide, and potassium hydroxide.
In addition, if necessary, nonionic surfactants, anionic surfactants, cationic surfactants, and defoaming agents can be used, and the solvents described in the section of "Varnish" can be used together as arbitrary components. That is, the aqueous dispersion contains a graft copolymer or a salt of the graft copolymer with the neutralizing agent, and water, and, if necessary, can further contain surfactants such as a nonionic surfactant, an anionic surfactant, and a cationic surfactant, a defoaming agent, and a solvent described in the section of <Varnish>.
The varnish or the aqueous dispersion can be suitably used as binders or anti-wear agents for coatings and inks used in various fields such as automobile and electric/electronic parts, building and packaging materials; dying auxiliaries, dispersion assistants for pigments and the like, antiblocking agents, additives for rust proof coatings, primers, coating agents, adhesives, floor polish, car wax, and sizing agents for glass fibers or carbon fibers, soft finishing agents for paper, additives for use in coatings for coated paper, urethane foam, release agents for molding rubber, and toner release agents.

[Aqueous Dispersion Composition]

The aqueous dispersion composition according to the present invention comprises the above-described particle (S) and water.
The content of the particle (S) in the aqueous dispersion composition according to the present invention is usually 0.1 to 70% by mass, preferably 0.5 to 50% by mass, and still more preferably 1 to 30% by mass. The content of water is usually 10 to 99% by mass, preferably 30 to 90% by mass, and still more preferably 50 to 80% by mass.
The aqueous dispersion composition according to the present invention may comprise one or more resins selected from urethane resins and acrylic resins and the like in addition to the particle (S) and water. The content of the resin is usually 10 to 60 parts by mass and preferably 20 to 50 parts by mass based on 100 parts by mass of water.
The particle (S), one or more resins selected from urethane resins and acrylic resins, and the like contained in the aqueous dispersion composition according to the present invention are not particularly limited as long as they are in a state of being dissolved or dispersed in an aqueous medium but are preferably in a state of being dispersed from the viewpoint that a film formed product having a high solid concentration can be prepared.
If necessary, the aqueous dispersion composition according to the present invention can comprise an acid-modified polyolefin compound and/or an aliphatic acid compound in order to stabilize the water dispersion of the particle (S) and the like, and, if necessary, can further contain an ionomer resin and/or a low-molecular-weight olefin-based polymer in order to impart antiblocking properties of a film.

If necessary, the aqueous dispersion composition according to the present invention can further contain a nonionic surfactant, an anionic surfactant, a cationic surfactant, and a defoaming agent, and further poor solvents such as an alcohol solvent, a ketone solvent, and ether solvents can also be used together.
It is to be noted that the term "aqueous" means a state in which a resin is dispersed in water and/or a state in which part of a resin is dissolved in water and includes the term "dispersed in water."

<Method for Producing Aqueous Dispersion Composition≥

The aqueous dispersion composition according to the present invention can be produced by mixing the particle (S) and water. For example, the aqueous dispersion composition can be obtained by adding the particle (S) to an aqueous urethane resin or an acrylic dispersion prepared by a known method.
For example, the aqueous dispersion composition according to the present invention can be produced by adding the particle (S) to a polyurethane dispersion containing a polyurethane resin obtained through a reaction of a prepolymer having an isocyanate group at an end with a chain extender containing a polyamine, where the prepolymer is obtained by reacting at least diisocyanate, a diol, and an active hydrogen group-containing compound having a hydrophilic group, and the polyurethane resin is dispersed in water.

<Uses of Aqueous Dispersion Composition>

The aqueous dispersion composition according to the present invention is suitable for uses such as a compatibilizer or a modifier for various polymer alloys, an adhesive, varnish, an aqueous dispersion, a viscosity modifier for liquids, and a coating material including a powder coating, and the like.
The aqueous dispersion composition can be suitably used as binders or anti-wear agents for coatings and inks used in various fields such as automobile and electric/electronic parts, building and packaging materials; dying auxiliaries, dispersion assistants for pigments and the like, antiblocking agents, additives for rust proof coatings, primers, coating agents, adhesives, floor polish, car wax, sizing agents for glass fibers or carbon fibers, soft finishing agents for paper, additives for use in coatings for coated paper, urethane foam, release agents for molding rubber, and toner release agents.

[Coating Composition]

The coating composition according to the present invention comprises the aqueous dispersion composition according to the present invention and, preferably, further comprises one or more resins selected from urethane resins and acrylic resins. The content of the resin is usually 10 to 60 parts by mass and preferably 20 to 50 parts by mass based on 100 parts by mass of water.
The urethane resin can have a carboxyl group, a sulfonyl group, and an ethylene oxide group in a molecule. Examples of components used for introducing these atom groups include 2,2-dimethylol lactic acid, 2,2-dimethylol propionic acid, 2,2-dimethylol butanoic acid, 2,2-dimethylol valeric acid, 3,4-diaminobutanesulfonic acid, 3,6-diamino-2-toluenesulfonic acid, polyethylene glycol, polyaddition compounds of ethylene oxide and propylene oxide, polymers of ethylene glycol and an active hydrogen compound.
Examples of the method for producing the urethane resin include the following method. For example, there is a method for producing a resin having a urethane bond in a molecule, in which a multifunctional isocyanate compound and a compound having an active hydrogen group which can react with an isocyanate group are used and reacted at an equivalent ratio such that the isocyanate group is excessive or an equivalent ratio such that the active hydrogen group is excessive in the presence or absence of an appropriate organic solvent.
The acrylic resin can be obtained by polymerizing an unsaturated monomer mixture selected from hydroxy group-containing unsaturated monomers, acid group-containing unsaturated monomers, and additional unsaturated monomers. Examples of the hydroxy group-containing unsaturated monomers include hydroxyethyl (meth)acrylate, hydroxypropyl (meth)acrylate, hydroxybutyl acrylate, PLACCEL FM1 ($\varepsilon$-caprolactone-modified hydroxyethyl methacrylate, manufactured by Daicel Corporation), polyethylene glycol mono(meth)acrylate, and polypropylene glycol mono(meth)acrylate. Examples of the acid group-containing monomers include: carboxylic acids such as (meth)acrylic acid, itaconic acid, crotonic acid, and maleic acid. Examples of the additional unsaturated monomers include: ester group-containing acrylic monomers such as methyl, ethyl, propyl, butyl, hexyl, ethylhexyl and lauryl esters of (meth)acrylic acid; vinyl alcohol ester monomers of a vinyl alcohol and a carboxylic acid such as acetic acid and propionic acid; unsaturated hydrocarbon monomers such as styrene, $\alpha$-methylstyrene, vinylnaphthalene, butadiene, and isoprene; nitrile monomers such as (meth)acrylonitrile; and (meth)acrylamide monomers such as (meth)acrylamide, N-methylolacrylamide, N,N-dimethylacrylamide, and diacetone acrylamide.

[Film and Film-Formed Product]

A film-formed product is obtained by applying the coating composition according to the present invention to a base substance and drying the applied coating composition, thereby forming a film on the base substance. The base substance is not particularly limited, and examples thereof include woody materials, building materials, civil engineering materials, automobile materials, terminal materials, electric/electronic materials, OA equipment materials, sporting tool materials, footwear materials, fiber flocking materials, and packaging materials. In the drying, the coating composition is dried in an atmosphere of usually 23 to 200°C and preferably 23 to 100°C for usually 10 to 180 minutes and preferably 20 to 60 minutes.

[Curable Resin Composition]

The curable resin composition according to the present invention contains the above-described particle (S), a curable resin (D), and a curing agent (E).

<Particle (S)>

The content of the particle (S) in the curable resin composition according to the present invention is preferably in a range of 1 to 30% by mass and more preferably in a range of 2 to 20% by mass.

<Curable Resin (D)>

As the curable resin (D), a resin which is cured by the curing agent (E) and external energy such as heat, light, an electron beam, or the like to form a three-dimensional cured product at least partially is preferably used, and thermosetting resins are particularly preferable.

Examples of the thermosetting resins include epoxy resins, phenol resins, melanin resins, bismaleimide resins, unsaturated polyester resins, vinyl ester resins, and benzoxazine resins, and epoxy resins and phenol resins are preferably used.

As an epoxy resin, any of conventionally known epoxy resins can be used and the epoxy resin is not particularly limited. Specific examples of the epoxy resins include: bifunctional epoxy resins such as bisphenol type epoxy resins, alcohol type epoxy resins, biphenyl type epoxy resins, naphthalene type epoxy resins, dicyclopentadiene type epoxy resins, diphenylfluorene type epoxy resins, hydrophthalic acid type epoxy resins, dimer acid type epoxy resins, and alicyclic type epoxy resins; glycidyl ether type epoxy resins such as tetrakis(glycidyloxyphenyl)ethane and tris(glycidyloxyphenyl)methane; glycidylamine type epoxy resins such as tetraglycidyl diaminodiphenylmethane; naphthalene type epoxy resins, phenol novolak type epoxy resins being novolak type epoxy resins, and cresol novolak type epoxy resins; and multifunctional epoxy resins such as phenol type epoxy resins. Further, various modified epoxy resins such as urethane-modified epoxy resins and rubber-modified epoxy resins can also be used. Modified epoxy resins are included in the epoxy resins. In addition, a mixture of these epoxy resins can also be used.

In addition, the phenol resin is a polymer of a phenol compound and a compound having a divalent linking group. Examples of the phenol resin include phenol novolak resins, a residue obtained by removing a bisphenol form from novolak, resol type phenol resins, phenol-dicyclopentadiene resins, phenol aralkyl resins, biphenyl aralkyl resins, naphthol aralkyl resins, and aniline aralkyl resins, and these can be used singly or together. Among these, phenol novolak resins are preferable from the viewpoint of availability and low prices.

The content of the curable resin (D) in the curable resin composition according to the present invention is preferably in a range of more than 0% by mass and 99% by mass or less and more preferably in a range of 60 to 85% by mass

<Curing Agent (E))>

As the curing agent (E), a known curing agent which cures the curable resin (D) is used. As the curing agent for an epoxy resin, for example, a compound having an active group which can react with an epoxy group is used. Examples of the curing agent (E) include aliphatic polyamines, aromatic polyamines, polyamide resins, secondary and tertiary amines, aminobenzoic acid esters, various acid anhydrides, phenol novolak resins, cresol novolak resins, polyphenol compounds, imidazole derivatives, tetramethylguanidine, thiourea-added amines, carboxylic acid anhydrides such as methylhexahydrophthalic anhydride, carboxylic acid hydrazides, carboxylic acid amides, polymercaptan, and Lewis acid complexes such as boron trifluoride ethylamine complexes. In addition, these curing agents may be used singly, or a plurality of these curing agents may be used together. By using an aromatic polyamine as a curing agent, an epoxy resin-cured product having a satisfactory heat resistance is obtained. Particularly, diamino diphenyl sulfone or derivatives

thereof, or various isomers thereof are suitable curing agents among the aromatic polyamines because an epoxy resin-cured product having a satisfactory heat resistance is obtained.

Examples of the curing agent for phenol resin molding materials include paraformaldehyde and hexamethylenetetramine (hexamine).

The preferred content of the curing agent (E) is different depending on the type of the curable resin (D) and the curing agent (E) and can be appropriately set. In one aspect, the content of the curing agent (E) in the curable resin composition according to the present invention is preferably in a range of 1 to 40 parts by mass and more preferably in a range of 10 to 40 parts by mass based on 100 parts by mass of the curable resin (D).

<Additional Components>

The curable resin composition according to the present invention may comprise a thermoplastic resin other than the particle (S), the curable resin (D), and the curing agent (E) within a range where the effects of the present invention are not impaired.

In addition, if necessary, the curable resin composition according to the present invention may further contain appropriate various additives such as a curing accelerator, a reactive diluent, a filler, an antiaging agent, a flame retardant, a pigment, a coupling agent, a fiber, a lubricant, and an abrasive. The content of various additives in the curable resin composition is usually 30% by mass or less and preferably 20% by mass or less.

<Method for Producing Curable Resin Composition and Cured Product Thereof>

The curable resin composition according to the present invention can be obtained by mixing the above-described particle (S), curable resin (D), curing agent (E), and additional constituent or constituents arbitrarily used by a known methodology.

For example, the curable resin composition according to the present invention can be produced by adding the particle (S) and the curing agent (E) to the curable resin (D) such as an epoxy resin in the form of liquid or a phenol resin in the form of powder, and mixing and curing a resultant mixture.

The curable resin (D) may be added in the process of producing the curable resin composition or may be added to a composition containing all the constituents except the curable resin (D) immediately before curing the curable resin composition.

The curing agent (E) may be added in the process of producing the curable resin composition or may be added to a composition containing all the constituents except the curing agent (E) immediately before curing the curable resin composition.

The particle (S) may be added in the process of producing the curable resin composition or may be added to a composition containing all the constituents except the particle (S) immediately before curing the curable resin composition.

In addition, the additional constituents such as the catalyst (curing agent), a solvent, a plasticizer, a filler, a colorant, and an additive may be added in the process of producing the curable resin composition or may be added to the curable resin composition immediately before curing the curable resin composition. In addition, some components of the additional constituents may be added in the process of producing the curable resin composition and the other components of the additional constituents may be added to the curable resin composition immediately before curing the curable resin composition.

As a condition of curing the curable resin composition according to the present invention, any of curing at room temperature, heat curing, light curing, and electron beam curing may be used. In addition, the means for making (molding) a cured product to be obtained from the curable resin composition is not limited, and known methodologies can be used. For example, a cured product having a desired shape can be obtained by applying or casting the curable resin composition and curing the curable resin composition as it is. That is, according to the present invention, a molded body formed from the curable resin composition is also provided.

<Uses of Curable Resin Composition>

The curable resin composition obtained by the present invention is suitable for various uses such as molded bodies, coatings, elastic coating materials, and waterproof materials. The curable resin composition can be suitably used as a raw material for binders for coatings and inks used in various fields such as automobile and electric/electronic parts, building and packaging materials; binders for friction materials, anti-wear agents, additives for rust proof coatings, primers, coating agents, adhesives, floor polish, car wax, binders for glass fibers or carbon fibers, soft finishing agents for paper, additives for use in coatings for coated paper, release agents for molding rubber, and toner release agents. The curable resin composition can be suitably used as various sliding parts because of properties excellent in wear

resistance in particular.

<Cured Product and Sliding Part>

The curable resin composition according to the present invention, when cured by a known method, can be used as a cured product. This cured product can be applied to uses of, for example, known epoxy resin-cured products. This cured product can be suitably used as various sliding parts because of properties excellent in wear resistance in particular. As a sliding part, the cured product can be used, for example, for metals and resins in automobile interior portions or exterior portions, various rubbers, coating of electric products, fiber reinforced composite materials, binders for friction materials such as a disk pad and a drum brake lining, and various protection liners.

[Prepreg]

A prepreg according to the present invention comprises a reinforced fiber (F) and a resin composition (G), and the resin composition (G) comprises the above-described particle (S), a thermosetting resin (H), and a curing agent (I).

<Reinforced Fiber (F)>

Examples of the reinforced fiber (F) include glass fibers, carbon fibers, aramid fibers, and boron fibers. Two types or more of these fibers may be mixed and used. Among others, carbon fibers which are light weighted and have high levels of mechanical properties are preferable.

The form of the reinforced fiber (F) is not particularly limited, and examples thereof include continuous fibers arranged in one direction by drawing, a single tow, roving, woven stuff, mats, knitted clothes, braids, nonwoven fabrics, and paper. For uses for which high specific strength and specific rigidity are required, composite materials using the continuous fibers arranged in one direction by drawing and a form in which fibers are made into the form of woven stuff are suitable for exhibiting high levels of mechanical properties.

<Resin Composition (G)>

The resin composition (G) comprises the particle (S), the thermosetting resin (H), and the curing agent (I).

<<Particle (S)>>

The resin composition (G) comprises 0.1 to 20% by mass, preferably 0.3 to 16% by mass, more preferably 0.5 to 10% by mass, and particularly preferably 0.5 to 8% by mass of the particle (S).

It is preferable that the content of the particle (S) be equal to or larger than the lower limit value in terms of improvements in the interlayer fracture toughness of a resultant fiber reinforced composite material, and also, it is preferable that the content of the particle (S) be equal to or less than the upper limit value in terms of mechanical properties, such as strength and elastic modulus, and heat resistance of a fiber reinforced composite material.

The particle (S) may be any of a non-crosslinked body and a crosslinked body, but the crosslinked body makes the elastic modulus of the particle higher than the non-crosslinked body and the mechanical properties of the thermosetting resin (H) is not lowered much, and therefore the crosslinked body is preferable from the viewpoint that the interlayer fracture toughness can be further improved and a fiber reinforced composite material having both the interlayer fracture toughness and a high heat resistance is obtained.

Methods for producing the particle (S) being a crosslinked body include: a method of treating the particle (S) being a non-crosslinked body with an organic peroxide; a method of irradiating the particle (S) with radial rays; a method of subjecting the particle (S) to a silane treatment; and the like. Usually, a change in the particle shape due to these crosslinking methods is not recognized. Accordingly, the particle (S) being a crosslinked body usually has a particle shape which is the same as that of the particle (S) before being crosslinked. For example, by irradiating the particle (S) being a non-crosslinked body with radial rays, cutting and crosslinking of molecular chains occur, and as a result, the molecular chains are connected at crosslinking points, so that a crosslinked body is obtained. The radial rays include an $\alpha$ ray, a $\beta$ ray, a $\gamma$ ray, an electron beam, and an ion, and any of them can be used, but the electron beam and the $\gamma$ ray are suitable. By performing crosslinking, deformation at high temperatures is further suppressed and an effect of maintaining the particle shape can be expected, and therefore the particle (S) being a crosslinked body is preferably used.

It is to be noted that in the method of performing irradiation with radial rays, the irradiation dose is usually 50 to 700 kGy and preferably 100 to 500 kGy. The irradiation dose within the range is preferable because the crosslinking reaction efficiently progresses. When the irradiation dose is equal to or less than the upper limit value, deterioration of the particle (S) is thereby suppressed, and when the irradiation dose is equal to or larger than the lower limit value,

crosslinking of polymer chains thereby progresses at a sufficient rate, and from these viewpoints, the irradiation dose within the range is preferable.

In addition, examples of the method for producing the particle (S) being a crosslinked body also include, in addition to the above-described methods, a method of crosslinking the precursor polymer (A) having a particle shape and thereafter introducing the polymer (B), thereby obtaining the core-shell type polymer solid product comprising the graft copolymer (C). As the method of crosslinking the precursor polymer (A), a method which is similar to the above-described method of crosslinking the particle (S) being a non-crosslinked body can be used.

With respect to a methodology for distinguishing whether the particle (S) is a non-crosslinked body or a crosslinked body, for example, when the particle (S) is added to liquid paraffin, the temperature of a resultant mixture is raised to 180°C, and the resultant mixture is then cooled to room temperature, whether the particle (S) is a non-crosslinked body or not can be distinguished by whether the particle shape is retained or not. The non-crosslinked body dissolves in liquid paraffin to form gel, but the crosslinked body retains the particle shape.

<<Thermosetting Resin (H)>>

As the thermosetting resin (H) to be a matrix resin, resins which are cured by heat to form a three-dimensional cured product at least partially are preferably used. Examples of the thermosetting resin (H) include epoxy resins, phenol resins, melanin resins, bismaleimide resins, unsaturated polyester resins, vinyl ester resins, and benzoxazine resins, and epoxy resins are particularly preferably used.

As an epoxy resin, any of conventionally known epoxy resins can be used and the epoxy resin is not particularly limited. Specific examples of the epoxy resins include: bifunctional epoxy resins such as bisphenol type epoxy resins, alcohol type epoxy resins, biphenyl type epoxy resins, naphthalene type epoxy resins, dicyclopentadiene type epoxy resins, diphenylfluorene type epoxy resins, hydrophthalic acid type epoxy resins, dimer acid type epoxy resins, and alicyclic type epoxy resins; glycidyl ether type epoxy resins such as tetrakis(glycidyloxyphenyl)ethane and tris(glycidyloxyphenyl)methane; glycidylamine type epoxy resins such as tetraglycidyl diaminodiphenylmethane; naphthalene type epoxy resins, phenol novolak type epoxy resins being novolak type epoxy resins, and cresol novolak type epoxy resins; and multifunctional epoxy resins such as phenol type epoxy resins. Further, various modified epoxy resins such as urethane-modified epoxy resins and rubber-modified epoxy resins can also be used. Modified epoxy resins are included in the epoxy resins. In addition, a mixture of these epoxy resins can also be used.

The content of the thermosetting resin (H) in the resin composition (G) is preferably in a range of 50 to 99% by mass and more preferably in a range of 60 to 85% by mass.

<<Curing Agent (I)>>

As the curing agent (I), a known curing agent which cures the thermosetting resin (H) is used. For example, as an epoxy curing agent being a curing agent for an epoxy resin, a compound having an active group which can react with an epoxy group is used. Examples thereof include aliphatic polyamines, aromatic polyamines, polyamide resins, secondary and tertiary amines, aminobenzoic acid esters, various acid anhydrides, phenol novolak resins, cresol novolak resins, polyphenol compounds, imidazole derivatives, tetramethylguanidine, thiourea-added amines, carboxylic acid anhydrides such as methylhexahydrophthalic anhydride, carboxylic acid hydrazides, carboxylic acid amides, polymercaptan, and Lewis acid complexes such as a boron trifluoride ethylamine complex. In addition, these curing agents may be used singly, or a plurality of these curing agents may be used together.

By using an aromatic polyamine as a curing agent, an epoxy resin-cured product having a satisfactory heat resistance is obtained. Particularly, diamino diphenyl sulfone or derivatives thereof, or various isomers thereof among the aromatic polyamines are curing agents suitable for obtaining an epoxy resin-cured product having a satisfactory heat resistance.

In addition, by using a combination of dicyandiamide and a urea compound, for example, 3,4-dichlorophenyl-1,1-dimethyurea, or using an imidazole as a curing agent, high heat resistance and water resistance are obtained even if curing is performed at a relatively low temperature. Curing an epoxy resin using an acid anhydride gives a cured product having a lower water absorption rate than curing using an amine compound. Besides, by using those obtained by making these curing agents latent, for example, by using those obtained by microencapsulating these curing agents, the storage stability, particularly tacking properties and drape properties, of prepregs become difficult to change even after the prepregs are left to stand at room temperature.

The preferred amount of the curing agent (I) added is different depending on the type of the thermosetting resin (H) and the curing agent (I) and can be appropriately set referring to the amount added in conventional prepregs. In one aspect, the amount of the curing agent (I) added is preferably in a range of 1 to 30 parts by mass and more preferably in a range of 10 to 25 parts by mass based on 100 parts by mass of the thermosetting resin (H). For example, in a combination of an epoxy resin and an aromatic polyamine, the curing agent is preferably added so that the amine

equivalent is generally in a range of 0.7 to 1.3 and preferably in a range of 0.8 to 1.2 based on 1 epoxy equivalent in terms of stoichiometry from the viewpoint of mechanical properties and heat resistance of fiber reinforced composite materials.

<<Additional Components>>

The resin composition (G) may comprise a thermoplastic resin other than the thermosetting resin (H), the curing agent (I), and the particle (S) within a range where the effects of the present invention are not impaired. The content of the thermoplastic resin in the resin composition (G) is usually 30% by mass or less, preferably 20% by mass or less, and more preferably 10% by mass or less.

In addition, if necessary, the resin composition (G) may further contain appropriate various additives such as a curing accelerator, a reactive diluent, a filler, an antiaging agent, a flame retardant, and a pigment. The content of various additives in the resin composition (G) is usually 10% by mass or less and preferably 5% by mass or less.

<<Method for Producing Resin Composition (G)>>

The method for producing the resin composition (G) is not particularly limited, and any of conventionally known methods may be used. For example, in the case where the thermosetting resin (H) is an epoxy resin, examples of the kneading temperature to be applied at the time of producing the resin composition (G) include a range of 10 to 200°C. When the kneading temperature exceeds 200°C, heat degradation or a partial curing reaction of the epoxy resin starts and the storage stability of the resultant resin composition (G) and a prepreg using the same may be deteriorated in some cases. When the kneading temperature is lower than 10°C, the viscosity of the resin composition (G) becomes high, so that it may become substantially difficult to perform kneading in some cases. The kneading temperature is preferably in a range of 20 to 180°C and more preferably in a range of 30 to 170°C.

As a mechanical apparatus for kneading, a conventionally known mechanical apparatus can be used. Examples of the mechanical apparatus include a roll mill, a planetary mixer, a kneader, an extruder, a Banbury mixer, a mixing container provided with a stirring blade, and a horizontal type mixing tank. Respective components can be kneaded in the atmosphere or an inert gas atmosphere. Particularly in the case where kneading is performed in the atmosphere, the atmosphere in which the temperature and the humidity are controlled is preferable. The atmosphere is not particularly limited, and for example, kneading is preferably performed in the atmosphere in which the temperature is controlled at a constant temperature of 30°C or less, or in the atmosphere of a low humidity, such as an atmosphere of a relative humidity of 50% RH or less.

Respective components may be kneaded in one stage, or in multiple stages by adding the respective components one by one. In addition, the components, when added one by one, can be added in an arbitrary sequence; however, it is preferable that the curing agent be added finally from the viewpoint of the storage stability of the resultant resin composition (G) and prepreg.

<Method for Producing Prepreg>

Next, the method for producing the prepreg will be described. The prepreg according to the present invention can be produced by impregnating the reinforced fiber (F) with the resin composition (G).

In addition, the method for producing the prepreg according to the present invention is not particularly limited and can be produced using any of conventionally known methods. Examples of the method include a hot-melt method in which the resin composition (G) obtained above is applied to release paper in the form of a thin film and impregnating the reinforced fiber (F) in the form of sheet with a resin film obtained by peeling the release paper and a solvent method in which the resin composition (G) is made into the form of varnish with a solvent and the reinforced fiber (F) is impregnated with this varnish. Among these, the hot-melt method is preferable from the viewpoint of handling properties and the mechanical properties of resultant fiber reinforced composite materials. The preferred range of the content of the reinforced fiber (F) in the resultant prepreg is different depending on the type and form of the reinforced fiber (F) and the composition of the resin composition (G); however, it is generally preferable that 10 to 80% by volume of the reinforced fiber (F) be contained.

[Fiber Reinforced Composite Material]

The fiber reinforced composite material according to the present invention is obtained by curing the prepreg according to the present invention. The prepreg can be used as a single layer or can be used by being laminated; however, the prepreg is generally used by being laminated. That is, after the prepreg according to the present invention is appropriately cut, the prepreg is laminated if necessary and is heated and pressed with an autoclave, a hot press, or

the like to be heat-cured and molded into a desired shape. The conditions for heat curing are determined according to the thermosetting resin and curing agent to be used. The conditions at the time of heat curing are different depending on the composition; however, the curing temperature is, for example, 100 to 300°C and preferably 150 to 200°C, and the curing time is, for example, 30 minutes to 10 hours and preferably 1 to 10 hours.

How to laminate the prepreg is not particularly specified and may be selected according to the circumstances of product design and the like. For example, quasi-isotropic lamination, one directional lamination, ± 45° lamination, and the like are used. However, in the case where two or more layers are laminated in the same direction, lamination is desirably performed so that the same types of carbon fibers are not placed one upon another from the viewpoint of efficiency of reinforcement.

Examples of the shape of a molded body include a flat plate shape, a cylindrical shape, and, in addition, a three-dimensional shape obtained by lamination molding of the prepreg. The thickness and orientation angle of the fiber may be decided according to the performance required for the resultant fiber reinforced composite material.

[Sintered Sheet]

A sheet according to the present invention is a sintered sheet obtained by sintering at least the above-described particle (S), namely, a sintered sheet made of at least a sintered body of the particle (S). The sintered sheet according to the present invention has the sintered body of the particle (S) made of the above-described core-shell type polymer solid product and therefore has high hydrophilicity and strength.

The water absorption rate of the sintered sheet according to the present invention is usually 50% or more, preferably 75 to 100%, and more preferably 80 to 100%. Details on conditions in measuring the water absorption rate will be described in Examples.

The tensile strength of the sintered sheet according to the present invention is usually 3 MPa or more, preferably 4 to 10 MPa, and more preferably 6 to 10 MPa. Details on conditions in measuring the tensile strength will be described in Examples.

The sintered sheet according to the present invention preferably has a hole and is useful as a porous sheet to which hydrophilicity is imparted. For example, the porosity of the sheet is preferably 20 to 45%, more preferably 30 to 45%, and still more preferably 35 to 45%. It is preferable that the sintered sheet according to the present invention have such an aspect from the viewpoint of water absorption properties and strength. It is to be noted that holes may be uniform over the whole sheet or may be nonuniform.

The porosity is calculated according to the expression, [(true density - apparent density)/true density] × 100 (%). The true density (g/cm$^3$) refers to the density of the particle, and the apparent density refers to a value obtained by dividing the mass of the sintered sheet by the volume obtained from the outer size of the sintered sheet.

In the sintered sheet according to the present invention, an additional particle other than the particle (S) may be used together with the particle (S) as long as the effects of the present invention are obtained. Examples of the additional particle include a polymer particle which is not subjected to graft modification. The polymer constituting the polymer particle is, for example, a polymer such as the above-described polyolefin described as the precursor polymer (A). Specifically, the additional particle is a polyolefin particle which is not subjected to graft modification.

The sintered sheet according to the present invention may have a member which does not inhibit the water absorption properties much, such as woven stuff, a knit fabric, a nonwoven fabric, cloth, a porous sheet, and wire netting, on the surface or in the inside thereof. In addition, the sintered sheet according to the present invention may have a non-hydrophilic sheet (such as non-moisture-permeable sheet or non-water-permeable sheet) on the surface or in the inside thereof in order not to have an influence of absorbed moisture around.

The sintered sheet according to the present invention has excellent hydrophilicity and strength and therefore can be utilized in general industrial uses. In addition, the sintered sheet according to the present invention can be suitably used: in electronics fields, such as an ink absorber for a printer, a support for a solid electrolyte, and a member for a fuel cell; as filtration filters, specifically filtration filters used for various industrial machines, automobiles, and building uses, a filtration filter for artificial dialysis, and a filtration filter for a biological analysis kit or the like; and as a humidifying element, an adsorption buffer material, a solution-holding material, and a separator sheet (these are used, for example, in uses for various industrial machines, automobiles, building materials, and the like).

For example, the sintered sheet according to the present invention may be produced by filling a metal mold with at least the particle (S) to perform sintering, and may be produced by depositing at least the particle (S) on a substrate to perform sintering.

The amount of the particle (S) used is usually 10% by mass or more, preferably 50% by mass or more, and more preferably 80% by mass or more in 100% by mass of all the particles. As described above, an additional particle other than the particle (S), for example, a polymer particle which is not subjected to graft modification, can also be used together with the particle (S).

The particle (S) and the additional particle can be mixed using, an apparatus such as, for example, a Henschel

mixer, a tumbler mixer, Ladies Mixer, a high-speed flow type mixer, or a V type mixer.

In addition, if necessary, at least one additive selected from a heat stabilizer, a weathering agent, an odor absorbent, a deodorant, a fungicide, an antibacterial agent, a perfume, and a filler may be added to the particle comprising the particle (S) to perform sintering. It is to be noted that a spreading agent such as liquid paraffin may also be used in adding the additive.

The heating temperature at the time of sintering is not particularly limited as long as the heating temperature is, for example, a temperature at which the particles (S) are bound to one another, and is usually 140°C or more, preferably 140 to 200°C, and more preferably 150 to 180°C. In addition, the heating time is usually 10 minutes or more, preferably 20 to 120 minutes, and more preferably 30 to 100 minutes although the heating time depends on the sheet shape and the like. As a heating method for sintering, for example, a hot air drier may be used, and methods of electric induction heating, electric resistance heating, and the like may be used.

Sintering is preferably performed in such a way as to leave a gap (hole) between the particles (S). When the surface layers of the particles (S) are bound by heating, the hole can be thereby formed easily.

Sintering can be performed under a pressureless condition or under increased pressure.

Examples of the materials of the metal mold and the substrate include iron, stainless steel, brass, and aluminum. The shape of the metal mold is not particularly limited as long as the metal mold has space in which molding into the form of sheet can be performed. It is to be noted that a vibration type apparatus can be used in filling a metal mold with the particle or depositing the particle onto a substrate.

Through sintering and molding described above, the sintered sheet according to the present invention can be obtained. In the present invention, modification can be performed without being accompanied by crosslinking of the particles and sintering of the particle as well as an unmodified polyolefin can be performed, so that a hydrophilic sintered sheet having strength which is equal to the strength of the sintered sheet of the unmodified polyolefin and having a higher water absorption rate than the sintered sheet of the unmodified polyolefin can be provided.

## Examples

The present invention will be described with reference to Examples, but the present invention is not limited by these Examples. "Part(s)" means "part(s) by mass" unless otherwise noted. In the following Examples/Comparative Examples, various analysis methods regarding the graft copolymers (polymer solid products) were performed according to the following procedures.

### <Infrared Absorption Spectroscopic Measurement>

In the case of a sample having a particle diameter or a thickness of 0.05 mm or more, a section passing through the center (x) of the sample and a point (z) on the surface where the distance between the center (x) and the surface of the sample is shortest was made, and thereafter measurement was performed at respective measurement places (the center (x), the point (z), and a middle point (y) of a line connecting the center (x) and the point (z)) by a total reflection (ATR) method using an micro infrared spectrometer (FTS-7000/UMA 600) manufactured by VARIAN, Inc. and a Ge crystal. The measurement range was set to 4000 $cm^{-1}$ to 600 $cm^{-1}$, the resolution was set to 4 $cm^{-1}$, and the cumulative number was set to 128 times.

On the other hand, in the case of a sample having a particle diameter or a thickness of less than 0.05 mm, a thin slice of a section passing through the center (x) of the sample and a point (z) on the surface where the distance between the center (x) and the surface of the sample is shortest was made using a microtome, and the slice was collected on a substrate (ZnS) to perform measurement at respective measurement places (the center (x), the point (z), and a middle point (y) of a line connecting the center (x) and the point (z)) by an AFM-IR method using a nanoscale infrared spectrometer (nanoIR2) manufactured by ANASYS INSTRUMENTS Corp. The measurement range was set to 2000 $cm^{-1}$ to 900 $cm^{-1}$, and the resolution was set to 4 $cm^{-1}$.

A value of the ratio of the absorbance at the key band derived from the graft copolymer to the absorbance at the key band derived from the precursor polymer, Abs (key band of polymer (B))/Abs (key band of precursor polymer (A)), was calculated from the obtained absorption spectrum.

In the case of a particle, the average value obtained by measuring five particles each randomly selected was adopted.

### <Grafting rate>

In the grafting rate represented by the following expression, the mass of the polymer (B) (graft polymer, graft portion) can be determined from the difference between the mass after the graft reaction and the mass of the precursor polymer (A), but can be determined by $^1$H-NMR measurement in the case where the increase in mass is slight.

$$\text{Grafting rate (\%)} = [\text{mass of polymer (B)}/\text{mass of precursor polymer (A)}] \times 100$$

<Average Particle Diameter of Powder Particle>

The average particle diameter of a powder particle was measured by a Coulter counter method (Coulter method).

<Average Particle Diameter of Pellet>

The diameters of 30 pellets were measured randomly with a stereoscopic microscope to take the average thereof.

[Core-Shell Type Polymer Solid Product]

[Example A1]

As the precursor polymer (A), an ultra-high molecular weight polyethylene (PE) powder having an average particle diameter of 0.03 mm (manufactured by Mitsui Chemicals, Inc., MIPELON (TM) XM-221U) was used, and as the graft monomer (b1), 2-hydroxyethyl methacrylate (HEMA) was used.

In a nitrogen atmosphere, 500 g of pure water and 100 g of the PE powder were charged in a 2-L separable flask, and the liquid temperature was adjusted to 40°C. Thereafter, nitrogen was fed into the liquid (nitrogen bubbling) at a rate of 2 L per minute for 30 minutes while the liquid was stirred, and 0.24 g of tributylboron (TBB) was then charged. Subsequently, 40 mL of air was fed into the liquid using a syringe in a nitrogen atmosphere while the liquid was stirred. After a lapse of 30 minutes, 25.6 g of HEMA was charged, and a resultant mixture was reacted for 2 hours. After the reaction was completed, air was fed into the liquid at a rate of 2 L per minute for 5 minutes.

Thereafter, a produced polymer was subjected to filtration with a glass filter and sufficiently washed with acetone to be vacuum-dried at 60°C for 8 hours.

[Example A2]

As the precursor polymer (A), an ultra-high molecular weight polyethylene (PE) powder having an average particle diameter of 0.03 mm (manufactured by Mitsui Chemicals, Inc., MIPELON XM-221U) was used, and as the graft monomer (b1), glycidyl methacrylate (GMA) was used.

In a nitrogen atmosphere, 500 g of pure water and 100 g of the PE powder were charged in a 2-L separable flask, and the liquid temperature was adjusted to 40°C. Thereafter, nitrogen was fed into the liquid (nitrogen bubbling) at a rate of 2 L per minute for 30 minutes while the liquid was stirred, and 0.2 g of tributylboron (TBB) was then charged. Subsequently, 40 mL of air was fed into the liquid using a syringe in a nitrogen atmosphere while the liquid was stirred. After a lapse of 30 minutes, 12.1 g of GMA was charged, and a resultant mixture was reacted for 2 hours. After the reaction was completed, air was fed into the liquid at a rate of 2 L per minute for 5 minutes.

Thereafter, a produced polymer was subjected to filtration with a glass filter and sufficiently washed with acetone to be vacuum-dried at 60°C for 8 hours.

[Example A3]

As the precursor polymer (A), a random polypropylene (PP) powder having an MFR = 13 g/10 minutes (230°C) and an average particle diameter of 0.33 mm (manufactured by Prime Polymer, Co., Ltd., J244P) was used, and as the graft monomer (b1), methyl methacrylate (MMA) was used.

In a nitrogen atmosphere, 1000 g of pure water and 100 g of the random PP powder were charged in a 2-L separable flask, and the liquid temperature was adjusted to 40°C while the liquid was stirred. Thereafter, 0.17 g of tributylboron (TBB) was charged. After a lapse of 30 minutes, 24.8 g of MMA was charged, and a resultant mixture was reacted for 2 hours. After the reaction was completed, air was fed into the liquid at a rate of 2 L per minute for 5 minutes.

Thereafter, a produced polymer was subjected to filtration with a glass filter and sufficiently washed with acetone to be vacuum-dried at 60°C for 8 hours.

[Example A4]

As the precursor polymer (A), a homoPP pellet having an MFR = 15 g/10 minutes (230°C) and an average particle diameter of 3.5 mm was used, and as the graft monomer (b1), methyl methacrylate (MMA) was used.

In a nitrogen atmosphere, 1000 g of pure water and 100 g of the homoPP pellet were charged in a 2-L separable flask, and the liquid temperature was adjusted to 40°C. Thereafter, nitrogen was fed into the liquid (nitrogen bubbling) at a rate of 2 L per minute for 30 minutes while the liquid was stirred, and 0.21 g of tributylboron (TBB) was then charged. Subsequently, 120 mL of air was fed into the liquid using a syringe in a nitrogen atmosphere while the liquid was stirred. After a lapse of 30 minutes, 25.4 g of MMA was charged, and a resultant mixture was reacted for 2 hours. After the reaction was completed, air was fed into the liquid at a rate of 2 L per minute for 5 minutes.

Thereafter, a produced polymer was subjected to filtration with a glass filter and sufficiently washed with acetone to be vacuum-dried at 60°C for 8 hours.

[Example A5]

As the precursor polymer (A), an ethylene/propylene random copolymer pellet having an MFR = 56 g/10 minutes (190°C), a density of 862 kg/$m^3$, and an average particle diameter of 4.5 mm was used, and as the graft monomer (b1), stearyl methacrylate (StMA) was used.

In a nitrogen atmosphere, 500 g of pure water and 100 g of the ethylene/propylene random copolymer pellet were charged in a 2-L separable flask, and the liquid temperature was adjusted to 40°C. Thereafter, nitrogen was fed into the liquid (nitrogen bubbling) at a rate of 2 L per minute for 30 minutes while the liquid was stirred, and 0.05 g of tributylboron (TBB) was then charged. Subsequently, 10 mL of air was fed into the liquid using a syringe in a nitrogen atmosphere while the liquid was stirred. After a lapse of 30 minutes, 21.4 g of StMA was charged, and a resultant mixture was reacted for 2 hours. After the reaction was completed, air was fed into the liquid at a rate of 2 L per minute for 5 minutes.

Thereafter, a produced polymer was subjected to filtration with a glass filter and sufficiently washed with acetone to be vacuum-dried at 60°C for 8 hours.

[Example A6]

As the precursor polymer (A), a propylene/butene random copolymer pellet having an MFR = 7 g/10 minutes (230°C), a density of 884 kg/$m^3$, and an average particle diameter of 4 mm was used, and as the graft monomer (b1), acrylic acid (AAc) was used.

Firstly, 100 g of the propylene/butene random copolymer pellet was immersed in AAc in a nitrogen atmosphere and was left to stand until the weight became constant. An AAc-impregnated pellet which was subjected to filtration was then prepared. The amount corresponding to AAc with which the pellet was impregnated was 8.7 g.

In a nitrogen atmosphere, 500 g of pure water and the AAc-impregnated pellet prepared above were charged in a 2-L separable flask, and the liquid temperature was adjusted to 40°C. Thereafter, nitrogen was fed into the liquid (nitrogen bubbling) at a rate of 2 L per minute for 30 minutes while the liquid was stirred, and 0.05 g of tributylboron (TBB) was then charged. Subsequently, 30 mL of air was fed into the liquid using a syringe in a nitrogen atmosphere while the liquid was stirred, and the liquid was then reacted for 2 hours. After the reaction was completed, air was fed into the liquid at a rate of 2 L per minute for 5 minutes.

Thereafter, a produced polymer was subjected to filtration with a glass filter and sufficiently washed with acetone to be vacuum-dried at 60°C for 8 hours.

[Example A7]

As the precursor polymer (A), a cast film having an average thickness of 0.05 mm and being cut into 4 cm × 4 cm, the cast film obtained by subjecting homoPP (manufactured by Prime Polymer Co., Ltd., F113G) to extrusion molding using a T-die, was used. In addition, as the graft monomer (b1), methyl methacrylate (MMA) was used.

In a nitrogen atmosphere, 50 g of pure water and 0.027 g of the 4 cm × 4 cm PP film were charged in a 0.1-L separable flask, and the liquid temperature was adjusted to 40°C. Thereafter, nitrogen was fed into the liquid (nitrogen bubbling) at a rate of 1 L per minute for 30 minutes while the liquid was stirred, and 0.052 g of tributylboron (TBB) was then charged. Subsequently, 30 mL of air was fed into the liquid using a syringe in a nitrogen atmosphere while the liquid was stirred. After a lapse of 30 minutes, 0.06 g of MMA was charged, and a resultant mixture was reacted for 2 hours. After the reaction was completed, air was fed into the liquid at a rate of 2 L per minute for 5 minutes.

Thereafter, the film was sufficiently washed with acetone to be vacuum-dried at 60°C for 8 hours.

[Example A8]

As the precursor polymer (A), an ultra-high molecular weight PE powder having an average particle diameter of 0.03 mm (manufactured by Mitsui Chemicals, Inc., MIPELON XM-221U) was used, and as the graft monomer (b1), 2-hydroxyethyl methacrylate (HEMA) was used.
In a nitrogen atmosphere, 500 g of pure water and 100 g of the PE powder were charged in a 2-L separable flask, and the liquid temperature was adjusted to 40°C. Thereafter, nitrogen was fed into the liquid (nitrogen bubbling) at a rate of 2 L per minute for 30 minutes while the liquid was stirred, and 0.27 g of tributylboron (TBB) was then charged. Subsequently, 40 mL of air was fed into the liquid using a syringe in a nitrogen atmosphere while the liquid was stirred. After a lapse of 30 minutes, 5.1 g of HEMA was charged, and a resultant mixture was reacted for 2 hours. After the reaction was completed, air was fed into the liquid at a rate of 2 L per minute for 5 minutes.
Thereafter, a produced polymer was subjected to filtration with a glass filter and sufficiently washed with acetone to be vacuum-dried at 60°C for 8 hours.

[Example A9]

As the precursor polymer (A), a PP nonwoven fabric having an average thickness of 0.222 mm and being cut into 10 cm × 12.5 cm (0.124 g), the PP nonwoven fabric molded by a melt-blown method, was used. In addition, as the graft monomer (b1), methyl methacrylate (MMA) was used.
In a separable flask, 1 L of water was charged, and the nonwoven fabric attached to a wire frame was subsequently suspended in such a way as to be immersed in water in the separable flask. Next, nitrogen was fed into the liquid (nitrogen bubbling) at a rate of 2 L per minute for 30 minutes, and the liquid temperature was then adjusted to 40°C. Thereafter, 0.0524 g of tributylboron (TBB) was charged while the liquid was stirred with a magnetic stirrer, and 30 mL of air was next fed into the liquid using a syringe. After a lapse of 30 minutes, 1.080 g of MMA was charged while stirring was continued without a break, and a resultant mixture was reacted for 2 hours. Next, the nonwoven fabric was taken out, sufficiently washed while being immersed in boiling acetone, and then vacuum-dried at 60°C for 1 hour.

[Comparative Example A1]

As a precursor polymer, an ethylene/propylene random copolymer pellet having an MFR = 56 g/10 minutes (190°C), a density of 862 kg/$m^3$, and an average particle diameter of 4.5 mm was used, and as a graft monomer, methyl methacrylate (MMA) was used.
In a nitrogen atmosphere, 400 mL of toluene and 20 g of the ethylene/propylene random copolymer pellet were charged in a 0.5-L separable flask, and the liquid temperature was adjusted to 40°C. Thereafter, nitrogen was fed into the liquid (nitrogen bubbling) at a rate of 2 L per minute for 30 minutes while the liquid was stirred, and 1 g of tributylboron (TBB) was then charged. Subsequently, 600 mL of air was fed into the liquid using a syringe in a nitrogen atmosphere while the liquid was stirred. After a lapse of 30 minutes, 20 g of MMA was charged, and a resultant mixture was reacted for 2 hours. After the reaction was completed, air was fed into the liquid at a rate of 2 L per minute for 5 minutes. The shape of the ethylene/propylene random copolymer pellet was not able to be retained during the reaction, and the polymer dissolved.
Thereafter, the polymer solution was poured into 2 L of acetone, which was being stirred, little by little, and a precipitated polymer was collected to be vacuum-dried at 60°C for 8 hours.

[Comparative Example A2]

As a precursor polymer, a homoPP powder having an MFR = 1.6 g/10 minutes (230°C) and an average particle diameter of 0.33 mm (manufactured by Prime Polymer Co., Ltd., E122P) was used, and as a graft monomer, methyl methacrylate (MMA) was used.
In a nitrogen atmosphere, 200 mL of n-heptane and 10 g of the homoPP powder were charged in a 0.5-L separable flask, and the liquid temperature was adjusted to 40°C. Thereafter, nitrogen was fed into the liquid (nitrogen bubbling) at a rate of 2 L per minute for 30 minutes while the liquid was stirred, and 0.05 g of tributylboron (TBB) was then charged. Subsequently, 30 mL of air was fed into the liquid using a syringe in a nitrogen atmosphere while the liquid was stirred. After a lapse of 30 minutes, 2.5 g of MMA was charged, and a resultant mixture was reacted for 2 hours. After the reaction was completed, air was fed into the liquid at a rate of 2 L per minute for 5 minutes.
Thereafter, a produced polymer was subjected to filtration with a glass filter and sufficiently washed with acetone to be vacuum-dried at 60°C for 8 hours.

[Comparative Example A3]

As a precursor polymer, a homoPP powder having an MFR = 0.6 g/10 minutes (230°C) and an average particle diameter of 0.38 mm was used, and as a graft monomer, maleic anhydride (MAH) was used.

In a planetary mixer having a volume of 2 L (manufactured by INOUE MFG., INC., PLM-2), 100 parts of the homoPP powder was loaded and was heated in an oil bath of a temperature of 125°C while being stirred in a nitrogen atmosphere. In this state, a solution obtained by dissolving 8.3 parts of MAH in 35 parts of toluene was dropped in the planetary mixer over 4 hours. Dropping of a solution obtained by dissolving 6.8 parts of t-butyl peroxy isopropyl monocarbonate (NOF CORPORATION, PERBUTYL I (PBI)) as an organic peroxide in 3.5 parts of toluene was started 30 minutes after the start of dropping the toluene solution containing MAH, and the whole amount was dropped over 2 hours and 40 minutes. After dropping of the toluene solution containing MAH was completed, heating/stirring were continued for further 1 hour to complete the reaction. During the reaction, the inside of the planetary mixer was in a nitrogen atmosphere at all times. After the reaction was completed, the contents were cooled and taken out to be placed in an autoclave, 280 parts of acetone was added, the autoclave was made into a tightly closed state, heating was performed with an oil bath of 100°C for 1 hour while stirring was performed, and cooling and filtration were performed after the completion of heating. The same operations were repeated three times in total, and vacuum drying was then performed at 60°C for 5 hours.

The amounts of respective raw materials loaded, grafting conditions, and the characteristics of the graft copolymers in the above Examples and Comparative Examples are shown in Table 1-1A and Table 1-2A.

[Table 1-1A]

Table 1-1A

| | | | Unit | Example A1 | Example A2 | Example A3 | Example A4 | Example A5 | Example A6 |
|---|---|---|---|---|---|---|---|---|---|
| Raw materials | Precursor polymer (A) | | Parts by mass | 100 | 100 | 100 | 100 | 100 | 100 |
| | | Type | - | Polyethylene (average particle diameter: 0.03 mm) | Polyethylene (average particle diameter: 0.03 mm) | Random PP (average particle diameter: 0.33 mm) | HomoPP (average particle diameter: 3.5 mm) | Ethylene/ propylene copolymer (average particle diameter: 4.5 mm) | Propylene/ butene copolymer (average particle diameter: 4 mm) |
| | Graft monomer (b1) | | Parts by mass | 25.6 | 12.1 | 24.8 | 25.4 | 21.4 | 8.7 |
| | | Type | - | HEMA | GMA | MMA | MMA | StMA | AAc |
| | Initiator | | Parts by mass | 0.24 | 0.2 | 0.17 | 0.21 | 0.05 | 0.05 |
| | | Type | - | TBB | TBB | TBB | TBB | TBB | TBB |
| Graft conditions | Solvent | | - | Water | Water | Water | Water | Water | Water |
| | Preliminary impregnation with graft monomer | | - | No | No | No | No | No | Yes |
| | Reaction temperature | | °C | 40 | 40 | 40 | 40 | 40 | 40 |
| | Reaction time | | hr | 2 | 2 | 2 | 2 | 2 | 2 |

(continued)

| | | | Unit | Example A1 | Example A2 | Example A3 | Example A4 | Example A5 | Example A6 |
|---|---|---|---|---|---|---|---|---|---|
| Characteristics of graft copolymer | Property of retaining shape of precursor polymer | | - | Good | Good | Good | Good | Good | Good |
| | Infrared absorption spectroscopic measurement | Key band of precursor polymer (A) | $cm^{-1}$ | 1460 ($CH_2$ bending vibration) | 1460 ($CH_2$ bending vibration) | 1377 ($CH_3$ bending vibration) | 1377 ($CH_3$ bending vibration) | 1377 ($CH_3$ bending vibration) | 1377 ($CH_3$ bending vibration) |
| | | Key band of graft polymer (B) | $cm^{-1}$ | 1720 (C=O stretching vibration) | 1730 (C=O stretching vibration) | 1730 (C=O stretching vibration) | 1730 (C=O stretching vibration) | 1723 (C=O stretching vibration) | 1711 (C=O stretching vibration) |
| | | X | - | 0 | 0 | 0 | 0 | 0 | 0 |
| | | Y | - | 0 | 0 | 0 | 0 | 0 | 0 |
| | | Z | - | 0.25 | 0.31 | 3.82 | 0.04 | 2.00 | 1.78 |
| | Grafting rate | | % | 3.4 | 8.2 | 20.9 | 3.4 | 18.1 | 3.4 |

X represents a value of Abs (key band of B)/Abs (key band of A) at (x)
Y represents a value of Abs (key band of B)/Abs (key band of A) at (y)
Z represents a value of Abs (key band of B)/Abs (key band of A) at (z)

[Table 1-2A]

Table 1-2A

| | | | Unit | Example A7 | Example A8 | Example A9 | Comparative Example A1 | Comparative Example A2 | Comparative Example A3 |
|---|---|---|---|---|---|---|---|---|---|
| Raw materials | Precursor polymer (A) | | Parts by mass | 100 | 100 | 100 | 100 | 100 | 100 |
| | | Type | - | HomoPP film (average thickness: 0.05 mm) | Polyethylene (average particle diameter: 0.03 mm) | Melt blown method polypropylene nonwoven fabric | Ethylene/ propylene copolymer (average particle diameter: 4.5 mm) | HomoPP (average particle diameter: 0.33 mm) | HomoPP (average particle diameter: 0.38 mm) |
| | Graft monomer (b1) | | Parts by mass | 222 | 5.1 | 871 | 100 | 25 | 8.3 |
| | | Type | - | MMA | HEMA | MMA | MMA | MMA | MAH |
| | Initiator | | Parts by mass | 193 | 0.27 | 42 | 5 | 0.5 | 6.8 |
| | | Type | - | TBB | TBB | TBB | TBB | TBB | PBI |
| Graft conditions | Solvent | | - | Water | Water | Water | Toluene | n-Heptane | Toluene |
| | Preliminary impregnation with graft monomer | | - | No | No | No | No | No | No |
| | Reaction temperature | | °C | 40 | 40 | 40 | 40 | 40 | 125 |
| | Reaction time | | hr | 2 | 2 | 2 | 2 | 2 | 5 |

(continued)

| | | | Unit | Example A7 | Example A8 | Example A9 | Comparative Example A1 | Comparative Example A2 | Comparative Example A3 |
|---|---|---|---|---|---|---|---|---|---|
| Characteristics of graft copolymer | Property of precursor retaining shape of polymer | | - | Good | Good | Good | Poor | Good | Good |
| | Infrared absorption spectroscopic measurement | Key band of precursor polymer (A) | $cm^{-1}$ | 1377 ($CH_3$ bending vibration) | 1460 ($CH_2$ bending vibration) | 1377 ($CH_3$ bending vibration) | 1377 ($CH_3$ bending vibration) | 1377 ($CH_3$ bending vibration) | 1460 ($CH_2$ bending vibration) |
| | | Key band of graft polymer (B) | $cm^{-1}$ | 1730 (C=O stretching vibration) | 1720 (C=O stretching vibration) | 1730 (C=O stretching vibration) | 1730 (C=O stretching vibration) | 1730 (C=O stretching vibration) | 1780 (C=O stretching vibration) |
| | | X | - | 0 | 0 | 0 | 0.05 | 0.01 | 0.16 |
| | | Y | - | 0 | 0 | 0 | 0.04 | 0.01 | 0.13 |
| | | Z | - | 0.19 | 0.03 | 0.10 | 0.04 | 0.01 | 0.14 |
| | Grafting rate | | % | 2.6 | 0.5 | 1.5 | 0.8 | 0.7 | 3.3 |
| X represents a value of Abs (key band of B)/Abs (key band of A) at (x)<br>Y represents a value of Abs (key band of B)/Abs (key band of A) at (y)<br>Z represents a value of Abs (key band of B)/Abs (key band of A) at (z) | | | | | | | | | |

[Example A10]

A water dispersion of the core-shell type graft copolymer obtained in Example A1 was prepared in the method described below. In a 50-mL glass container, 1 g of the polymer, 25 mL of pure water, and a stirring bar were charged, and a resultant mixture was stirred using a magnetic stirrer at room temperature for 1 hour to prepare the water dispersion.

[Example A11]

A water dispersion was prepared in the same manner as in Example A10 except that the polymer obtained in Example A2 was used.

[Example A12]

A water dispersion was prepared in the same manner as in Example A10 except that the polymer obtained in Example A8 was used.

[Comparative Example A4]

A water dispersion was prepared in the same manner as in Example A10 except that the ultra-high molecular weight PE powder (manufactured by Mitsui Chemicals, Inc., MIPELON XM-221U), which is the precursor polymer used in Examples A1, A2 and A8, was used, and evaluation of dispersibility in water was performed.
Evaluation results in the above Examples and Comparative Examples are shown in Table 2A.

[Table 2A]

Table 2A

| | Example A10 | Example A11 | Example A12 | Comparative Example A4 |
|---|---|---|---|---|
| Polymer used | Example A1 | Example A2 | Example A8 | PE powder (MIPELON XM-221U) |
| Dispersibility to water | Good | Good | Fair | Poor |

The evaluation method in Table 2A is described below.

<Evaluation of Water Dispersibility>

As water dispersibility of each polymer, the contents of the glass container were observed after preparing each water dispersion described above, and evaluation with good, fair, or poor was performed according to the following criteria.

Good:-Uniform dispersion of the polymer can be ascertained by visual observation 60 seconds after the stop of stirring.
Fair: Uniform dispersion of the polymer can be ascertained by visual observation 5 seconds after the stop of stirring, but an interface of phase separation can be ascertained by visual observation 60 seconds after the stop of stirring.
Poor: An interface of phase separation can be ascertained by visual observation 5 seconds after the stop of stirring.

[Aqueous Dispersion Composition]

[Example B1]

A particle (S1), which is a graft copolymer, in an amount of 103.4 g was obtained in the same manner as in Example A1 described above. In a 50-mL glass container, 1 g of the obtained particle (S1), 30 g of an aqueous urethane resin (TAKELAC WS-6021 manufactured by Mitsui Chemicals, Inc.) in which a urethane resin is dispersed in water, and a stirring bar were charged, and a resultant mixture was stirred using a magnetic stirrer at room temperature for 10 minutes to obtain an aqueous dispersion composition.
The dispersibility of the particle (S1) into the aqueous urethane resin was evaluated by the method described below, and thereafter this aqueous dispersion composition was applied to an EPDM substrate on which a primer (UNISTOLE P-501 manufactured by Mitsui Chemicals, Inc.) was applied in advance, and the applied aqueous dispersion composition was dried in an atmosphere of 70°C for 30 minutes to obtain a film-formed article.

[Example B2]

A particle (S3), which is a graft copolymer, in an amount of 108.2 g was obtained in the same manner as in Example A2 described above. Subsequent steps were carried out using this particle (S3) in the same manner as in Example B1.

[Comparative Example B1]

An aqueous urethane resin (TAKELAC WS-6021 manufactured by Mitsui Chemicals, Inc.) was applied to an EPDM substrate on which a primer (UNISTOLE P-501 manufactured by Mitsui Chemicals, Inc.) was applied in advance, and the applied aqueous urethane resin was dried in an atmosphere of 70°C for 30 minutes to obtain a film-formed article.

[Comparative Example B2]

An aqueous dispersion composition and a film-formed article were obtained in the same manner as in Examples B1 and B2 except that the ultra-high molecular weight PE powder (manufactured by Mitsui Chemicals, Inc., MIPELON XM-221U), which is the precursor polymer (A) used in Example A1 and Example A2, was used in place of the particle (S1) or (S3).

The amounts of respective raw materials loaded and the characteristics of the particles in the above Examples and Comparative Examples are shown in Table 1B. In addition, results of evaluating the sliding properties and wear resistance of the above film-formed articles are shown in Table 1B.

[Table 1B]

Table 1B

| | | Example B1 | Example B2 | Comparative Example B1 | Comparative Example B2 |
|---|---|---|---|---|---|
| Precursor polymer (A) | Parts by mass | 100 | 100 | - | 100 |
| Graft monomer (b1) | Parts by mass | 25.6 | 12.1 | - | - |
| | Type | HEMA | GMA | - | - |
| Characteristics of particle Infrared absorption spectroscopy | Key band of precursor polymer (A) | 1460 $cm^{-1}$ | 1460 $cm^{-1}$ | - | 1460 $cm^{-1}$ |
| | Key band of graft polymer (B) | 1720 $cm^{-1}$ | 1730 $cm^{-1}$ | - | - |
| | X | 0 | 0 | - | 0 |
| | Y | 0 | 0 | - | 0 |
| | Z | 0.25 | 0.31 | - | 0 |
| Characteristics of particle | Grafting rate | 3.4% | 8.2% | - | 0% |
| | Average particle diameter | 30 μm | 30 μm | - | 30 μm |
| Dispersibility of water dispersion | | Good | Good | - | Poor |

(continued)

| | | Example B1 | Example B2 | Comparative Example B1 | Comparative Example B2 |
|---|---|---|---|---|---|
| Evaluation of sliding properties | Static friction coefficient | 0.4 | 0.3 | 7.1 | 0.5 |
| | Dynamic friction coefficient | 0.7 | 0.4 | 2 | 0.8 |
| Evaluation of wear resistance | Wear loss | 1 mg | 2 mg | 140 mg | 32 mg |
| | Dynamic friction coefficient (1st time round) | 0.2 | 0.2 | 1.4 | 0.2 |
| | Dynamic friction coefficient (2000th time round) | 0.2 | 0.3 | Unable to continue measurement due to rupture of film | 0.3 |
| | Dynamic friction coefficient (20000th time round) | 0.3 | 0.2 | | 0.3 |
| | Dynamic friction coefficient (30000th time round) | 0.2 | 0.2 | | Unable to continue measurement due to rupture of film |
| | Dynamic friction coefficient (40000th time round) | 0.3 | 0.3 | | |

Respective evaluation methods in Table 1B will be described below.

<Evaluation of Water Dispersibility>

As described above, in each aqueous dispersion composition obtained by adding each particle to the aqueous urethane resin and dispersing the particle by stirring, the state after dispersion was observed to evaluate the dispersibility according to the following criteria.

Good: Uniform dispersion of the polymer can be ascertained by visual observation 60 seconds after the stop of stirring.
Fair: Uniform dispersion of the polymer can be ascertained by visual observation 5 seconds after the stop of stirring, but an interface of phase separation can be ascertained by visual observation 60 seconds after the stop of stirring.
Poor: An interface of phase separation can be ascertained by visual observation 5 seconds after the stop of stirring.

<Evaluation of Sliding Properties>

The obtained film-formed articles were used, and the static friction coefficient and the dynamic friction coefficient were determined by detecting stress with a load cell, the stress generated when a film face was contacted with a glass flat plate (63 mm × 63 mm × 5 mm), and a load of 200 g was applied to each film-formed article at room temperature to slide the film-formed article at a rate of 100 mm/min.

<Evaluation of Wear Resistance>

The obtained film-formed articles were used, and a film face was contacted with a glass plate (R at tip of 10), and a load of 500 g was applied to each film-formed article at room temperature to slide the film-formed article back and forth 40000 times at a rate of 48 times of back-and-forth slides/min to determine the difference in the mass before and after the back-and-forth slides as the wear loss. Further, dynamic friction coefficient at the first time round, at 2000th

time round, at 20000th time round, at 30000th time round, and at 40000th time round of the back-and-forth slides were measured.

[Curable Resin Composition]

[Example C1]

A solid product, which is a graft copolymer, in an amount of 103.4 g was obtained in the same manner as in Example A1 described above. In a 150-mL plastic container, 2 g of the obtained graft copolymer, 15 g of an epoxy resin (trade name: jER828, manufactured by Mitsubishi Chemical Corporation), and, as an curing agent, 5 g of a modified aromatic amine (trade name: jERCURE W, manufactured by Mitsubishi Chemical Corporation) were charged, a resultant mixture was stirred at 2000 rpm for 2 minutes and, further, defoamed for 3 minutes using a rotation-revolution type defoaming mixer to obtain a curable resin composition. The obtained curable resin composition was poured into a Teflon (R) petri dish and was cured at 120°C for 2 hours and thereafter 170°C for 2 hours to make a sample, which is a flat-plate molded article.

[Example C2]

A solid product, which is a graft copolymer, in an amount of 108.2 g was obtained in the same manner as in Example A2 described above. Subsequent steps were carried out using this solid product in the same manner as in Example C1.

[Comparative Example C1]

A sample was made in the same manner as Example C1 except that the graft copolymer was not used.

[Comparative Example C2]

A sample was made in the same manner as Example C1 except that 2 g of an ultra-high molecular weight PE powder having an average particle diameter of 0.03 mm (manufactured by Mitsui Chemicals, Inc., MIPELON XM-221U) was used in place of 2 g of the graft copolymer.

The amounts of respective raw materials loaded and the characteristics of the graft copolymers in the above Examples and Comparative Examples are shown in Table 1C. In addition, results of evaluating the sliding property and wear resistance of the above molded articles are shown in Table 1C.

[Table 1C]

Table 1C

| | | Example C1 | Example C2 | Comparative Example C1 | Comparative Example C2 |
|---|---|---|---|---|---|
| Precursor polymer (A) | Parts by mass | 100 | 100 | - | 100 |
| Graft monomer (b1) | Parts by mass | 25.6 | 12.1 | - | - |
| | Type | HEMA | GMA | - | - |
| Characteristics of graft copolymer Infrared absorption spectroscopy | Key band of precursor polymer (A) | 1460 $cm^{-1}$ | 1460 $cm^{-1}$ | - | 1460 $cm^{-1}$ |
| | Key band of graft polymer (B) | 1720 $cm^{-1}$ | 1730 $cm^{-1}$ | - | - |
| | X | 0 | 0 | - | - |
| | Y | 0 | 0 | - | - |
| | Z | 0.25 | 0.31 | - | - |

(continued)

| | | Example C1 | Example C2 | Comparative Example C1 | Comparative Example C2 |
|---|---|---|---|---|---|
| Grafting rate of graft copolymer | | 3.4% | 8.2% | - | - |
| Evaluation of sliding properties | Dynamic friction coefficient | 0.17 | 0.17 | 0.71 | 0.29 |
| Evaluation of wear resistance | Specific wear loss ($10^{-3}$ $mm^3$/kgf·km) | 110 | 90 | 20000 | 2600 |

Respective evaluation methods in Table 1C will be described below.

<Evaluation of Sliding Property and Evaluation of Wear Resistance>

The dynamic friction coefficient and the specific wear loss were measured using a Matsubara type friction and wear tester in accordance with JIS K7218 "Testing Methods for Sliding Wear Resistance of Plastics, Method A" to evaluate the sliding property and the wear resistance. The testing conditions were set as follows, opposite material: S45C, rate: 50 cm/sec, distance: 3 km, load: 15 kg, and temperature of measurement environment: 23°C.

[Prepreg and Fiber Reinforced Composite Material]

The following prepregs were made and evaluated in an atmosphere of a temperature of 25°C ± 2°C and a relative humidity of 50% unless otherwise noted.

[Production Example D1]

A particle (S1), which is a graft copolymer, in an amount of 103.4 g was obtained in the same manner as in Example A1 described above.

[Production Example D2]

The particle (S1) was irradiated with an electron beam of 200 kGy to obtain a particle (S2), which is a crosslinked body.

[Production Example D3]

A particle (S3), which is a graft copolymer, in an amount of 108.2 g was obtained in the same manner as in Example A2 described above.

[Production Example D4]

The particle (S3) was irradiated with an electron beam of 200 kGy to obtain a particle (S4), which is a crosslinked body.

[Reference Example D1]

Ultra-high molecular weight PE powder having an average particle diameter of 0.03 mm
(manufactured by Mitsui Chemicals, Inc. (TM) XM-221U)

The types of respective raw materials, and the average particle diameters, grafting rate, whether the particle is crosslinked or non-crosslinked, and results of infrared absorption spectroscopic measurement of the respective particles obtained or used in the above Production Examples and the like are shown in Table 1D.

[Table 1D]

Table 1D

| | Production Example D1 | Production Example D2 | Production Example D3 | Production Example D4 | Reference Example D1 |
|---|---|---|---|---|---|
| Particle | S1 | S2 | S3 | S4 | XM-221U |
| Precursor polymer (A) | XM-221U | XM-221U | XM-221U | XM-221U | - |
| Graft monomer (b1) | HEMA | HEMA | GMA | GMA | - |
| Irradiated with electron beam or not | Not irradiated | Irradiated | Not irradiated | Irradiated | - |
| Crosslinked or not | Non-crosslinked | Crosslinked | Non-crosslinked | Crosslinked | - |
| Average particle diameter ($\mu$m) | 30 | 30 | 30 | 30 | 30 |
| Key band of (A) | 1460 $cm^{-1}$ | 1460 $cm^{-1}$ | 1460 $cm^{-1}$ | 1460 $cm^{-1}$ | 1460 $cm^{-1}$ |
| Key band of (B) | 1720 $cm^{-1}$ | 1720 $cm^{-1}$ | 1730 $cm^{-1}$ | 1730 $cm^{-1}$ | - |
| X | 0 | 0 | 0 | 0 | 0 |
| Y | 0 | 0 | 0 | 0 | 0 |
| z | 0.25 | 0.25 | 0.31 | 0.31 | 0 |
| Grafting rate (%) | 3.4 | 3.4 | 8.2 | 8.2 | 0 |

<Whether Particle is Crosslinked or Non-crosslinked>

After 5% mass of a particle was added to liquid paraffin, and a resultant mixture was left to stand in an heating oven in an atmosphere of 180°C for 1 hour, the particle shape after cooling the mixture to room temperature was observed. In the case where the particle dissolved in liquid paraffin to form gel, the particle was evaluated to be a non-crosslinked body, and in the case where the particle shape was retained, the particle was evaluated to be a crosslinked body.

[Examples D1 to 16 and Comparative Examples D2 to 5]

An epoxy resin (trade name: jER828, manufactured by Mitsubishi Chemical Corporation) was used as a thermosetting resin to be a parent material of a matrix resin, and a modified aromatic amine (trade name: jERCURE W, manufactured by Mitsubishi Chemical Corporation) was used as a curing agent. The amounts blended were such that 25 parts of the modified aromatic amine was used based on 100 parts of the epoxy resin. These were mixed to prepare a mixture (hereinafter, also referred to as "mixture 1").

Any of the particles (S1) to (S4) obtained above and the ultra-high molecular weight PE powder having an average particle diameter of 0.03 mm (manufactured by Mitsui Chemicals, Inc., MIPELON (TM) XM-221U) was added to the mixture 1 in the concentration shown in Table 2D and Table 3D (amount of resultant resin composition is assumed to be 100% by mass), and a resultant mixture was stirred and mixed at 600 rpm with a hot stirrer under a condition of 100°C for 24 hours to make a resin composition in the form of varnish.

A laminated prepreg having 12 layers was made using the resin composition and a plain weave fabric (trade name: TORAYCA cloth, manufactured by Toray Industries, Inc.) of a carbon fiber by a hand lay-up method. The laminated prepreg was cured at 100°C for 2 hours and thereafter at 175°C for 4 hours while being loaded with a pressure of 4 kPa to make a flat plate sample, which is a fiber reinforced composite material.

[Comparative Example D1]

The mixture 1 prepared in Example 01 or the like was stirred and mixed at 600 rpm with a hot stirrer for 24 hours under a condition of 100°C to make a resin composition in the form of varnish. Subsequent steps were carried out using this resin composition in the same manner as in Example D1 or the like to make a flat plate sample.

The tensile strength, tensile elastic modulus, bending strength, bending elastic modulus, and interlayer fracture toughness value were measured using the above samples by the methods which will be described later. Results are

shown in Table 2D and Table 3D.

[Table 2D]

Table 2D

| | Example D1 | Example D2 | Example D3 | Example D4 | Example D5 | Example D6 | Example D7 | Example D8 | Example D9 | Example D10 | Example D11 | Example D12 |
|---|---|---|---|---|---|---|---|---|---|---|---|---|
| Particle | S1 | S1 | S1 | S1 | S2 | S2 | S2 | S2 | S3 | S3 | S3 | S3 |
| Particle concentration (% by mass) | 1 | 2.5 | 5 | 9 | 1 | 2.5 | 5 | 9 | 1 | 2.5 | 5 | 9 |
| Tensile strength (MPa) | 550 | 555 | 530 | 520 | 590 | 590 | 560 | 545 | 560 | 560 | 540 | 53 0 |
| Tensile elastic modulus (MPa) | 53 | 52 | 52 | 52 | 54 | 52 | 52 | 51 | 52 | 52 | 51 | 51 |
| Bending strength (MPa) | 710 | 700 | 680 | 650 | 775 | 765 | 725 | 660 | 720 | 710 | 680 | 680 |
| Bending elastic modulus (GPa) | 55 | 56 | 55 | 57 | 55 | 56 | 55 | 55 | 55 | 56 | 55 | 54 |
| Interlayer fracture toughness value ($KJ/m^2$) | 2.32 | 2.27 | 2.16 | 2.15 | 2.48 | 2.40 | 2.20 | 2.18 | 2.45 | 2.41 | 2.28 | 2.23 |

[Table 3D]

Table 3D

| | Example D13 | Example D14 | Example D15 | Example D16 | Comparative Example D1 | Comparative Example D2 | Comparative Example D3 | Comparative Example D4 | Comparative Example D5 |
|---|---|---|---|---|---|---|---|---|---|
| Particle | S4 | S4 | S4 | S4 | - | XM-221U | XM-221U | XM-221U | XM-221U |
| Particle concentration (% by mass) | 1 | 2.5 | 5 | 9 | 0 | 1 | 2.5 | 5 | 9 |
| Tensile strength (MPa) | 590 | 590 | 575 | 555 | 475 | 510 | 515 | 490 | 485 |
| Tensile elastic modulus (MPa) | 53 | 52 | 51 | 53 | 48 | 52 | 52 | 51 | 50 |
| Bending strength (MPa) | 785 | 775 | 725 | 690 | 650 | 660 | 640 | 630 | 620 |
| Bending elastic modulus (GPa) | 55 | 56 | 55 | 55 | 53 | 55 | 55 | 55 | 55 |
| Interlayer fracture toughness value ($KJ/m^2$) | 2.55 | 2.54 | 2.30 | 2.27 | 1.98 | 2.03 | 2.03 | 2.01 | 1.99 |

Respective evaluation methods in Table 2D and Table 3D will be described below.

<Tensile Strength and Tensile Elastic Modulus of Composite Material>

The tensile strength and the tensile elastic modulus were measured by a tensile test. An aluminum tab having a length of 50 mm was attached at both ends of a test piece having a width of 20 mm and a length of 200 mm. Measurement was performed using a TENSILON universal tester (RTC-1350A, manufactured by ORIENTEC CORPORATION) at a testing speed of 1 mm/min.

<Bending Strength and Bending Elastic Modulus of Composite Material>

The bending strength and the bending elastic modulus were measured by the three-point bending test described in JIS K7074. A test piece having a width of 15 mm and a length of 100 mm was prepared, and measurement was performed using an Instron universal tester (Type 55R4026, manufactured by Instron Corporation) at a testing speed of 5 mm/min.

<Interlayer Fracture Toughness Value of Composite Material>

A mode II interlayer fracture toughness value was measured by an ENF (End Notched Flexure) test. An initial crack having an initial crack length of 40 mm was introduced to a test piece having a width of 25 mm, a length of 140 mm, and a thickness of 3 mm. The mode II interlayer fracture toughness value was determined using an Instron universal tester (Type 55R4026, manufactured by Instron Corporation) by the three-point bending test. The testing speed was set to 0.5 mm/min.

[Sintered Sheet]

[Production Example E1]

A particle (S1), which is a graft copolymer, was obtained in the same manner as in Example A1 described above.

[Production Example E2]

A particle (S3), which is a graft copolymer, was obtained in the same manner as in Example A2 described above.

[Production Example E3]

An ultra-high molecular weight PE powder having an average particle diameter of 0.03 mm (manufactured by Mitsui Chemicals, Inc., MIPELON XM-221U) was irradiated with an electron beam of 10 kGy to obtain a particle (cS1), which is a crosslinked body.

[Production Example E4]

An ultra-high molecular weight PE powder having an average particle diameter of 0.03 mm (manufactured by Mitsui Chemicals, Inc., MIPELON XM-221U) was irradiated with an electron beam of 100 kGy to obtain a particle (cS3), which is a crosslinked body.

[Reference Example E1]

Ultra-high molecular weight PE powder having an average particle diameter of 0.03 mm
(manufactured by Mitsui Chemicals, Inc., MIPELON XM-221U)

The types of respective raw materials, and the average particle diameters, grafting rate, whether the particle is crosslinked or non-crosslinked, and results of infrared absorption spectroscopic measurement of the respective particles obtained or used in the above Production Examples and the like are shown in Table 1E.

[Table 1E]

Table 1E

| | Production Example E1 | Production Example E2 | Production Example E3 | Production Example E4 | Reference Example E1 |
|---|---|---|---|---|---|
| Particle | S1 | S3 | cS1 | cS3 | XM-221U |
| Precursor polymer (A) | XM-221U | XM-221U | XM-221U | XM-221 U | - |
| Monomer (b) | HEMA | GMA | - | - | - |
| Average particle diameter ($\mu$m) | 30 | 30 | 30 | 30 | 30 |
| Irradiated with electron beam or not | Not irradiated | Not irradiated | Irradiated (10 kGy) | Irradiated (100 kGy) | Not irradiated |
| Key band of (A) | 1460 $cm^{-1}$ | 1460 $cm^{-1}$ | 1460 $cm^{-1}$ | 1460 $cm^{-1}$ | 1460 $cm^{-1}$ |
| Key band of (B) | 1720 $cm^{-1}$ | 1730 $cm^{-1}$ | - | - | - |
| X | 0 | 0 | 0 | 0 | 0 |
| Y | 0 | 0 | 0 | 0 | 0 |
| Z | 0.25 | 0.31 | 0 | 0 | 0 |
| Grafting rate (%) | 3.4 | 8.2 | 0 | 0 | 0 |

[Examples E1 to E2 and Comparative Examples E1 to E3]

Making Sintered Sheet

A metal mold (size: thickness of 2 mm, width of 100 mm, and height of 100 mm) was filled with each of the particles obtained in the Production Examples or the particle of the Reference Example by vibration to perform sintering and molding through heating at a temperature of 150°C for 60 minutes, and thus sintered sheets each having a thickness of 2 mm were obtained.

[Table 2E]

Table 2E

| | Example E1 | Example E2 | Comparative Example E1 | Comparative Example E2 | Comparative Example E3 |
|---|---|---|---|---|---|
| Particle | S1 | S3 | cS1 | cS3 | XM-221U |
| Porosity (%) | 42 | 41 | 40 | Unable to be sintered | 41 |
| Tensile strength (MPa) | 8.7 | 9.1 | 0.7 | - | 8.8 |
| Water absorption ratio (%) | 100 | 100 | 1 | - | 2 |

Respective evaluation methods in Table 2E will be described below.

<Porosity (%)>

Porosity (%) was calculated according to the expression, [(true density - apparent density)/true density] $\times$100

(%). The true density (g/cm$^3$) is the density of the polyolefin particle, and the apparent density (g/cm$^3$) is a value obtained by dividing the mass of a sintered sheet by the volume calculated from the outer size of the sintered sheet.

<Tensile Strength (MPa)>

Tensile strength (MPa) was measured under conditions of 30 mm/min and 23°C in accordance with JIS K7113.
(tensile tester manufactured by Instron Corporation was used)

<Water Absorption Rate (%)>

A sample piece (sintered sheet) the mass of which was measured in advance was put into a container filled with pure water and was left to stand for 10 minutes. The mass of the sample piece the surface of which was wiped twice with paper for wrapping powdered medicine immediately after the sample piece was taken out was measured. The water absorption rate (%) was calculated according to the expression, the rate of change in mass of sample piece/porosity × 100 (%).
As described in Table 2E, the sintered sheet made of the unmodified polyolefin particle had a low hydrophilicity. The sintered sheet made of the polyolefin particle modified under conditions of a low dose of the electron beam had a weak strength and a low hydrophilicity. In addition, the sheet made of the polyolefin particle modified under the condition of large dose of the electron beam was not able to be sintered. In contrast, the sintered sheets each made of a specific particle (S) maintained the strength and had a high hydrophilicity as well.

[Gradient Type Polymer Solid Product]

[Example F1]

As the precursor polymer (A), an ethylene/propylene random copolymer pellet having an MFR = 56 g/10 minutes (190°C), a density of 862 kg/m$^3$, and an average particle diameter of 4.5 mm was used, and as the graft monomer (b1), methyl methacrylate (MMA) was used.
Firstly, in a nitrogen atmosphere, 100 g of the ethylene/propylene random copolymer pellet was immersed a whole day and night in a tributylboron (TBB)/n-butanol solution the concentration of which was adjusted to 5 wt% in advance, and a TBB-impregnated pellet which was subjected to filtration was then prepared. The amount corresponding to TBB with which the pellet was impregnated was 1.4 g.
In a nitrogen atmosphere, 500 g of pure water was charged in a 2-L separable flask, nitrogen was fed into the liquid (nitrogen bubbling) at a rate of 2 L per minute for 30 minutes while the liquid was stirred, the TBB-impregnated pellet prepared above was thereafter charged, and the liquid temperature was adjusted to 40°C. Subsequently, 30 mL of air was fed into the liquid using a syringe in a nitrogen atmosphere while the liquid was stirred. After a lapse of 30 minutes, 24.7 g of MMA and, as a chain transfer agent, 0.26 g of 3-mercaptopropionic acid were charged respectively, and a resultant mixture was reacted for 2 hours. After the reaction was completed, air was fed into the liquid at a rate of 2 L per minute for 5 minutes.
Thereafter, a produced polymer was subjected to filtration with a glass filter and sufficiently washed with acetone to be vacuum-dried at 60°C for 8 hours.

[Example F2]

As the precursor polymer (A), an ethylene/propylene random copolymer pellet having an MFR = 56 g/10 minutes (190°C), a density of 862 kg/m$^3$, and an average particle diameter of 4.5 mm was used, and as the graft monomer (b1), methyl methacrylate (MMA) was used.
Firstly, in a nitrogen atmosphere, 100 g of the ethylene/propylene random copolymer pellet was immersed a whole day and night in a tributylboron (TBB)/n-butanol solution the concentration of which was adjusted to 5 wt% in advance, and a TBB-impregnated pellet which was subjected to filtration was then prepared. The amount corresponding to TBB with which the pellet was impregnated was 1.5 g.
In a nitrogen atmosphere, 500 g of pure water was charged in a 2-L separable flask, nitrogen was fed into the liquid (nitrogen bubbling) at a rate of 2 L per minute for 30 minutes while the liquid was stirred, the TBB-impregnated pellet prepared above was thereafter charged, and the liquid temperature was adjusted to 40°C. Subsequently, 30 mL of air was fed into the liquid using a syringe in a nitrogen atmosphere while the liquid was stirred. After a lapse of 30 minutes, 24.5 g of MMA was charged, and a resultant mixture was reacted for 2 hours. After the reaction was completed, air was fed into the liquid at a rate of 2 L per minute for 5 minutes.
Thereafter, a produced polymer was subjected to filtration with a glass filter and sufficiently washed with acetone

to be vacuum-dried at 60°C for 8 hours.

[Example F3]

As the precursor polymer (A), a random PP powder having an MFR = 0.8 g/10 minutes (230°C) and an average particle diameter of 0.33 mm (manufactured by Prime Polymer, Co., Ltd., B251P) was used, and as the graft monomer (b1), methyl methacrylate (MMA) was used.
In a nitrogen atmosphere, 200 g of pure water was charged in a 0.5-L separable flask, and the liquid temperature was adjusted to 40°C. Thereafter, nitrogen was fed into the liquid (nitrogen bubbling) at a rate of 2 L per minute for 30 minutes while the liquid was stirred, and 2.61 g of tributylboron (TBB) was then charged. Subsequently, 1500 mL of air was fed into the liquid using a syringe in a nitrogen atmosphere while the liquid was stirred, and 10 g of the random PP powder was then charged. After a lapse of 30 minutes, 4.83 g of MMA was charged, and a resultant mixture was reacted for 2 hours. After the reaction was completed, air was fed into the liquid at a rate of 2 L per minute for 5 minutes.
Thereafter, a produced polymer was subjected to filtration with a glass filter and sufficiently washed with acetone to be vacuum-dried at 60°C for 8 hours.

[Example F4]

As the precursor polymer (A), a propylene/butene random copolymer pellet having an MFR = 7 g/10 minutes (230°C), a density of 884 kg/$m^3$, and an average particle diameter of 4 mm was used, and as the graft monomer (b1), methyl methacrylate (MMA) was used.
In a nitrogen atmosphere, 1000 g of pure water and 100 g of the propylene/butene random copolymer pellet were charged in a 2-L separable flask, and the liquid temperature was adjusted to 40°C. Thereafter, nitrogen was fed into the liquid (nitrogen bubbling) at a rate of 2 L per minute for 30 minutes while the liquid was stirred, and 0.18 g of tributylboron (TBB) was then charged. Subsequently, 120 mL of air was fed into the liquid using a syringe in a nitrogen atmosphere while the liquid was stirred. After a lapse of 30 minutes, 26 g of MMA was charged, and a resultant mixture was reacted for 2 hours. After the reaction was completed, air was fed into the liquid at a rate of 2 L per minute for 5 minutes.
Thereafter, a produced polymer was subjected to filtration with a glass filter and sufficiently washed with acetone to be vacuum-dried at 60°C for 8 hours.

[Example F5]

As the precursor polymer (A), a propylene/butene random copolymer pellet having an MFR = 7 g/10 minutes (230°C), a density of 884 kg/$m^3$, and an average particle diameter of 4 mm was used, and as the graft monomer (b1), methacrylic acid (MA) was used.
Firstly, 100 g of the propylene/butene random copolymer pellet was immersed in MA in a nitrogen atmosphere for 5 days, and an MA-impregnated pellet which was subjected to filtration was then prepared. The amount corresponding to MA with which the pellet was impregnated was 12 g.
In a nitrogen atmosphere, 500 g of pure water and the MA-impregnated pellet prepared above were charged in a 2-L separable flask, and the liquid temperature was adjusted to 40°C. Thereafter, nitrogen was fed into the liquid (nitrogen bubbling) at a rate of 2 L per minute for 30 minutes while the liquid was stirred, and 0.1 g of tributylboron (TBB) was then charged. Subsequently, 30 mL of air was fed into the liquid using a syringe in a nitrogen atmosphere while the liquid was stirred, and the liquid was then reacted for 2 hours. After the reaction was completed, air was fed into the liquid at a rate of 2 L per minute for 5 minutes.
Thereafter, a produced polymer was subjected to filtration with a glass filter and sufficiently washed with acetone to be vacuum-dried at 60°C for 8 hours.

[Example F6]

As the precursor polymer (A), a propylene/butene random copolymer pellet having an MFR = 7 g/10 minutes (230°C), a density of 884 kg/$m^3$, and an average particle diameter of 4 mm was used, and as the graft monomer (b1), n-butyl methacrylate (n-BMA) was used.
In a nitrogen atmosphere, 500 g of pure water and 100 g of the propylene/butene random copolymer pellet were charged in a 2-L separable flask, and the liquid temperature was adjusted to 40°C. Thereafter, nitrogen was fed into the liquid (nitrogen bubbling) at a rate of 2 L per minute for 30 minutes while the liquid was stirred, and 0.05 g of tributylboron (TBB) was then charged. Subsequently, 30 mL of air was fed into the liquid using a syringe in a nitrogen atmosphere while the liquid was stirred. After a lapse of 30 minutes, 34 g of n-BMA was charged, and a resultant mixture was reacted for 2 hours. After the reaction was completed, air was fed into the liquid at a rate of 2 L per minute for 5 minutes.

Thereafter, a produced polymer was subjected to filtration with a glass filter and sufficiently washed with acetone to be vacuum-dried at 60°C for 8 hours.

[Example F7]

As the precursor polymer (A), a propylene/butene random copolymer pellet having an MFR = 7 g/10 minutes (230°C), a density of 884 kg/$m^3$, and an average particle diameter of 4 mm was used, and as the graft monomer (b1), tert-butyl methacrylate (t-BMA) was used.
In a nitrogen atmosphere, 500 g of pure water and 100 g of the propylene/butene random copolymer pellet were charged in a 2-L separable flask, and the liquid temperature was adjusted to 40°C. Thereafter, nitrogen was fed into the liquid (nitrogen bubbling) at a rate of 2 L per minute for 30 minutes while the liquid was stirred, and 0.05 g of tributylboron (TBB) was then charged. Subsequently, 30 mL of air was fed into the liquid using a syringe in a nitrogen atmosphere while the liquid was stirred. After a lapse of 30 minutes, 34.2 g of t-BMA was charged, and a resultant mixture was reacted for 2 hours. After the reaction was completed, air was fed into the liquid at a rate of 2 L per minute for 5 minutes.
Thereafter, a produced polymer was subjected to filtration with a glass filter and sufficiently washed with acetone to be vacuum-dried at 60°C for 8 hours.

[Example F8]

As the precursor polymer (A), a polycarbonate pellet having an average particle diameter of 6 mm (manufactured by TEIJIN LIMITED, Panlite L-1225Y) was used, and as the graft monomer (b1), methyl methacrylate (MMA) was used.
In a nitrogen atmosphere, 50 g of pure water and 10 g of the polycarbonate pellet were charged in a 0.1-L separable flask, and the liquid temperature was adjusted to 40°C. Thereafter, nitrogen was fed into the liquid (nitrogen bubbling) at a rate of 1 L per minute for 30 minutes while the liquid was stirred, and 0.052 g of tributylboron (TBB) was then charged. Subsequently, 30 mL of air was fed into the liquid using a syringe in a nitrogen atmosphere while the liquid was stirred. After a lapse of 30 minutes, 2.49 g of MMA was charged, and a resultant mixture was reacted for 2 hours. After the reaction was completed, air was fed into the liquid at a rate of 1 L per minute for 5 minutes.
Thereafter, a produced polymer was subjected to filtration with a glass filter and sufficiently washed with acetone to be vacuum-dried at 60°C for 8 hours.

[Example F9]

As the precursor polymer (A), a cast film having an average thickness of 0.05 mm and being cut into 4 cm × 4 cm, the cast film obtained by subjecting homoPP (manufactured by Prime Polymer Co., Ltd., F113G) to extrusion molding using a T-die, was used. In addition, as the graft monomer (b1), methyl methacrylate (MMA) was used.
In a nitrogen atmosphere, 50 g of pure water and 0.034 g of the 4 cm × 4 cm PP film were charged in a 0.1-L separable flask, and the liquid temperature was adjusted to 40°C. Thereafter, nitrogen was fed into the liquid (nitrogen bubbling) at a rate of 1 L per minute for 30 minutes while the liquid was stirred, and 0.051 g of tributylboron (TBB) was then charged. Subsequently, 30 mL of air was fed into the liquid using a syringe in a nitrogen atmosphere while the liquid was stirred. After a lapse of 30 minutes, 0.21 g of MMA was charged, and a resultant mixture was reacted for 2 hours. After the reaction was completed, air was fed into the liquid at a rate of 2 L per minute for 5 minutes.
Thereafter, the film was sufficiently washed with acetone to be vacuum-dried at 60°C for 8 hours.

[Reference Example F1]

As a precursor polymer, an ethylene/propylene random copolymer pellet having an MFR = 56 g/10 minutes (190°C), a density of 862 kg/$m^3$, and an average particle diameter of 4.5 mm was used, and as a graft monomer, methyl methacrylate (MMA) was used.
In a nitrogen atmosphere, 1000 g of pure water and 100 g of the ethylene/propylene random copolymer pellet were charged in a 2-L separable flask, and the liquid temperature was adjusted to 40°C. Thereafter, nitrogen was fed into the liquid (nitrogen bubbling) at a rate of 2 L per minute for 30 minutes while the liquid was stirred, and 0.2 g of tributylboron (TBB) was then charged. Subsequently, 120 mL of air was fed into the liquid using a syringe in a nitrogen atmosphere while the liquid was stirred. After a lapse of 30 minutes, 25.7 g of MMA was charged, and a resultant mixture was reacted for 2 hours. After the reaction was completed, air was fed into the liquid at a rate of 2 L per minute for 5 minutes.
Thereafter, a produced polymer was subjected to filtration with a glass filter and sufficiently washed with acetone to be vacuum-dried at 60°C for 8 hours.

[Comparative Example F1]

Comparative Example F1 was carried out in the same manner as Comparative Example A1 described above.

[Comparative Example F2]

Comparative Example F2 was carried out in the same manner as Comparative Example A2 described above.

[Comparative Example F3]

Comparative Example F3 was carried out in the same manner as Comparative Example A3 described above.

The amounts of respective raw materials loaded, grafting conditions, and the characteristics of the graft copolymers in the above Examples and Comparative Examples are shown in Table 1-1F and Table 1-2F.

[Table 1-1F]

Table 1-1F

| | | | Unit | Example F1 | Example F2 | Example F3 | Example F4 | Example F5 | Example F6 | Example F7 |
|---|---|---|---|---|---|---|---|---|---|---|
| Raw materials | Precursor polymer (A) | | Parts by mass | 100 | 100 | 100 | 100 | 100 | 100 | 100 |
| | | Type | - | Ethylene/ propylen e copolymer (average particle diameter: 4.5 mm) | Ethylene/ propylen e copolymer (average particle diameter: 4.5 mm) | Random PP (average particle diameter: 0.33 mm) | Propylene/ butene copolymer (average particle diameter: 4 mm) | Propylene/ butene copolymer (average particle diameter: 4 mm) | Propylene/ butene copolymer (average particle diameter: 4 mm) | Propylene/ butene copolymer (average particle diameter: 4 mm) |
| | Graft monomer (b1) | | Parts by mass | 24.7 | 24.5 | 48.3 | 26 | 12 | 34 | 34.2 |
| | | Type | - | MMA | MMA | MMA | MMA | MA | n-BMA | t-BMA |
| | Initiator | | Parts by mass | 1.4 | 1.5 | 26.1 | 0.18 | 0.1 | 0.05 | 0.05 |
| | | Type | - | TBB | TBB | TBB | TBB | TBB | TBB | TBB |
| Graft conditions | Solvent | | - | Water | Water | Water | Water | Water | Water | Water |
| | Preliminary impregnation with graft monomer | | - | No | No | No | No | Yes | No | No |
| | Preliminary impregnation with initiator | | - | Yes | Yes | No | No | No | No | No |
| | Chain transfer agent | | - | Yes | No | No | No | No | No | No |
| | Reaction temperature | | °C | 40 | 40 | 40 | 40 | 40 | 40 | 40 |
| | Reaction time | | hr | 2 | 2 | 2 | 2 | 2 | 2 | 2 |

(continued)

| | | | Unit | Example F1 | Example F2 | Example F3 | Example F4 | Example F5 | Example F6 | Example F7 |
|---|---|---|---|---|---|---|---|---|---|---|
| Characteristics of graft copolymer (C) | Property of retaining shape of precursor polymer | | - | Good | Good | Good | Good | Good | Good | Good |
| | Infrared absorption spectroscopic measurement | Key band of precursor polymer (A) | $cm^{-1}$ | 1377 ($CH_3$ bending vibration) | 1377 ($CH_3$ bending vibration) | 1377 ($CH_3$ bending vibration) | 1377 ($CH_3$ bending vibration) | 1461 ($CH_2$ bending vibration) | 1461 ($CH_2$ bending vibration) | 1377 ($CH_3$ bending vibration) |
| | | Key band of graft polymer (B) | $cm^{-1}$ | 1730 (C=O stretching vibration) | 1730 (C=O stretching vibration) | 1730 (C=O stretching vibration) | 1730 (C=O stretching vibration) | 1698 (C=O stretching vibration) | 1730 (C=O stretching vibration) | 1725 (C=O stretching vibration) |
| | | X | - | 0.42 | 0.17 | 0.12 | 0.02 | 0.04 | 0.02 | 0.01 |
| | | Y | - | 0.45 | 0.29 | 0.56 | 0.03 | 0.05 | 0.04 | 0.02 |
| | | Z | - | 1.03 | 4.60 | 1.64 | 0.18 | 2.00 | 0.20 | 0.05 |
| | Grafting rate | | % | 6.9 | 13.7 | 42 | 7.8 | 6.1 | 17.4 | 12.5 |

X represents a value of Abs (key band of B)/Abs (key band of A) at (x)
Y represents a value of Abs (key band of B)/Abs (key band of A) at (y)
Z represents a value of Abs (key band of B)/Abs (key band of A) at (z)

[Table 1-2F]

Table 1-2F

| | | | Unit | Example F8 | Example F9 | Reference Example F1 | Comparative Example F1 | Comparative Example F2 | Comparative Example F3 |
|---|---|---|---|---|---|---|---|---|---|
| Raw materials | Precursor polymer (A) | | Parts by mass | 100 | 100 | 100 | 100 | 100 | 100 |
| | | Type | - | Polycarbonate (average particle diameter: 6 mm) | HomoPP film (average thickness: 0.05 mm) | Ethylene/ propylene copolymer (average particle diameter: 4.5 mm) | Ethylene/ propylene copolymer (average particle diameter: 4.5 mm) | HomoPP (average particle diameter: 0.33 mm) | HomoPP (average particle diameter: 0.38 mm) |
| | Graft monomer (b1) | | Parts by mass | 24.9 | 618 | 25.7 | 100 | 25 | 8.3 |
| | | Type | - | MMA | MMA | MMA | MMA | MMA | MAH |
| | Initiator | | Parts by mass | 0.52 | 150 | 0.2 | 5 | 0.5 | 6.8 |
| | | Type | - | TBB | TBB | TBB | TBB | TBB | PB1 |
| Graft conditions | Solvent | | - | Water | Water | Water | Toluene | n-Heptane | Toluene |
| | Preliminary impregnation with graft monomer | | - | No | No | No | No | No | No |
| | Preliminary impregnation with initiator | | - | No | No | No | No | No | No |
| | Chain transfer agent | | - | No | No | No | No | No | No |
| | Reaction temperature | | °C | 40 | 40 | 40 | 40 | 40 | 125 |
| | Reaction time | | hr | 2 | 2 | 2 | 2 | 2 | 5 |

(continued)

| | | | Unit | Example F8 | Example F9 | Reference Example F1 | Comparative Example F1 | Comparative Example F2 | Comparative Example F3 |
|---|---|---|---|---|---|---|---|---|---|
| Characteristics of graft copolymer (C) | Property of retaining shape of precursor polymer | | - | Good | Good | Good | Poor | Good | Good |
| | Infrared absorption spectroscopic measurement | Key band of precursor polymer (A) | $cm^{-1}$ | 1603 (C=O stretching vibration) | 1377 ($CH_3$ bending vibration) | 1377 ($CH_3$ bending vibration) | 1377 (CH3 bending vibration) | 1377 ($CH_3$ bending vibration) | 1460 ($CH_2$ bending vibration) |
| | | Key band of graft polymer (B) | $cm^{-1}$ | 1728 (C=O stretching vibration) | 1730 (C=O stretching vibration) | 1730 (C=O stretching vibration) | 1730 (C=O stretching vibration) | 1730 (C=O stretching vibration) | 1780 (C=O stretching vibration) |
| | | X | - | 1.19 | 0.92 | 0 | 0.05 | 0.01 | 0.16 |
| | | Y | - | 1.24 | 124 | 0 | 0.04 | 0.01 | 0.13 |
| | | Z | - | 14.95 | 1.29 | 0.20 | 0.04 | 0.01 | 0.14 |
| | Grafting rate | | % | 13.3 | 29.3 | 8.5 | 0.8 | 0.7 | 3.3 |
| X represents a value of Abs (key band of B)/Abs (key band of A) at (x)<br>Y represents a value of Abs (key band of B)/Abs (key band of A) at (y)<br>Z represents a value of Abs (key band of B)/Abs (key band of A) at (z) | | | | | | | | | |

[Example F10]

A solution (polymer concentrate) containing 10% by mass of the gradient type graft copolymer obtained in Example F1 was prepared using Yubase-4 (manufactured by SK lubricants Co., Ltd.), and Yubase-4 as base oil and LUBRAN 165 (manufactured by TOHO Chemical Industry Co., Ltd.) as a pour point depressant were then blended to prepare a lubricant oil composition.

[Comparative Example F4]

A lubricant oil composition was prepared in the same manner as in Example F10 except that the polymer obtained in Reference Example F1 was used.

[Comparative Example F5]

A lubricant oil composition was prepared in the same manner as in Example F10 except that the ethylene/propylene random copolymer, which is the precursor polymer used in Example F1 and Reference Example F1, was used.
Blend ratios and evaluation results in the above Examples and Comparative Examples are shown in Table 2F. It is to be noted that the blend samples were prepared in such a way as to have a constant dynamic viscosity (10 $mm^2/s$) at 100°C by adjusting the amount of the polymer concentrate blended.

[Table 2F]

Table 2F

| | | | Example F10 | Comparative Example F4 | Comparative Example F5 |
|---|---|---|---|---|---|
| Formula | Polymer blended | | Example F1 | Reference Example F1 | Ethylene/propylene random copolymer |
| | Polymer | wt% | 1.88 | 1.80 | 1.73 |
| | Pour point depressant | wt% | 0.30 | 0.30 | 0.30 |
| | Base oil | wt% | 97.82 | 97.90 | 97.97 |
| Performance of lubricant oil | Appearance | - | Good | Poor | Good |
| | Dynamic viscosity (40°C) | $mm^2/s$ | 54.2 | 54.5 | 54.9 |
| | Dynamic viscosity (100°C) | $mm^2/s$ | 10.1 | 10.0 | 10.0 |
| | Viscosity index | - | 176 | 172 | 170 |
| | SSI | % | 6.1 | 10.7 | 5.5 |

Respective evaluation methods in Table 2F will be described below.

<Evaluation of Modification of Viscosity Properties of Oil>

Effects of modifying viscosity properties of oil in the case where each gradient type graft copolymer obtained was added to oil were evaluated in evaluation of the properties of the gradient type graft copolymer.

• Solubility (Appearance)

Solubility of each polymer to the base oil was evaluated as follows. Each polymer concentrate was left to stand at room temperature for one week after preparation to observe the appearance.

Good: no sediment or suspended substance exists
Poor: a sediment or a suspended substance exists

• Viscosity Properties

With respect to the dynamic viscosity and the viscosity index, the dynamic viscosity at 100°C and at 40°C were measured by the method described in JIS K2283 to calculate the viscosity index.

• Shear Stability Index (SSI)

Measurement was performed based on JPI-5S-29-88. The SSI is a yardstick for the loss of dynamic viscosity due to cutting of molecular chains of a copolymer in a lubricant oil under a high shear condition, and a larger SSI value indicates a larger loss of the dynamic viscosity.

Industrial Applicability

According to the present invention, by a core-shell type graft copolymer having a high proportion of various functional groups introduced only to the surface of the polymer, or a gradient type graft copolymer having a higher proportion of various functional groups introduced near the surface of the polymer than in the central portion of the polymer, the features of a raw material polymer are exploited, and the affinity with other materials can be exhibited, which has been difficult by the raw material polymer as it is.
The uses of the molded article according to the present invention are not particularly limited, and the molded article according to the present invention can be suitably utilized as, for example, a compatibilizer or a modifier for various polymer alloys, an adhesive, varnish, an aqueous dispersion, and a coating material including a powder coating.

## Claims

**1.** A core-shell type polymer solid product comprising a graft copolymer (C) having: a main chain portion derived from a precursor polymer (A); and a graft portion derived from a polymer (B) different from the polymer (A), wherein:

a core portion (a) of the solid product comprises the main chain portion derived from the precursor polymer (A), and a shell portion (b) of the solid product comprises the graft portion derived from the polymer (B); and
the core-shell type polymer solid product satisfies the following requirement (I):
Requirement (I): In infrared absorption spectroscopic measurement of a section passing through a center (x) of the solid product, a point (z) on a surface where a distance between the center (x) and the surface is shortest, and a middle point (y) of a line connecting the center (x) and the point (z), absorbance (Abs) at the center (x), at the middle point (y), and at the point (z) satisfy the following relationship:

$$X < 0.01,$$

$$Y < 0.01,$$

and

$$Z \geq 0.01,$$

wherein

X represents a value of Abs (key band of polymer (B))/Abs (key band of polymer (A)) at the center (x),
Y represents a value of Abs (key band of polymer (B))/Abs (key band of polymer (A)) at the middle point (y), and
Z represents a value of Abs (key band of polymer (B))/Abs (key band of polymer (A)) at the point (z).

**2.** The core-shell type polymer solid product according to claim 1, being a particle (S) having an average particle

diameter of 0.0001 mm to 1000 mm.

3. The core-shell type polymer solid product according to claim 1, being a molded article having an average thickness or diameter of 0.0001 mm to 50 mm.

4. The core-shell type polymer solid product according to any one of claims 1 to 3, wherein the precursor polymer (A) is a polymer obtained from one, or two or more $\alpha$-olefins selected from $\alpha$-olefins having 2 to 18 carbon atoms.

5. The core-shell type polymer solid product according to any one of claims 1 to 4, wherein the polymer (B) is a polymer of a monomer component comprising at least one monomer (b1) having an ethylenically unsaturated group and a polar functional group within a same molecule.

6. The core-shell type polymer solid product according to any one of claims 1 to 5, having a grafting rate (%) of 1% or more and 150% or less, the grafting rate represented by the following expression:

$$\text{Grafting rate (\%)} = [\text{mass of polymer (B)}/\text{mass of precursor polymer (A)}] \times 100.$$

7. A method for producing the core-shell type polymer solid product according to any one of claims 1 to 6, the method comprising grafting the polymer (B) different from the polymer (A) to a solid product comprising the precursor polymer (A) with a shape of the solid product retained, thereby producing the solid product having the core portion (a) comprising a structure unit derived from the polymer (A) and the shell portion (B) comprising a structure unit derived from the polymer (B).

8. The method for producing the core-shell type polymer solid product according to claim 7, wherein the solid product comprising the precursor polymer (A) is a particle having an average particle diameter of 0.0001 mm to 1000 mm.

9. The method for producing the core-shell type polymer solid product according to claim 7, wherein the solid product comprising the precursor polymer (A) is a molded article having an average thickness or diameter of 0.0001 mm to 50 mm.

10. An aqueous dispersion composition comprising:

    a particle (S) being the core-shell type polymer solid product according to claim 1, 4, 5, or 6 (provided that "a center (x) of the solid product" in the requirement (I) is replaced by "a center (x) of the particle (S)"); and
    water.

11. The aqueous dispersion composition according to claim 10, wherein the particle (S) has an average particle diameter of 150 $\mu$m or less.

12. A coating composition comprising the aqueous dispersion composition according to claim 10 or 11.

13. The coating composition according to claim 12, further comprising one or more selected from a urethane resin and an acrylic resin.

14. A film formed from the coating composition according to claim 12 or 13.

15. A film-formed product obtained by applying the coating composition according to claim 12 or 13 to a base substance comprising a woody material, a building material, a civil engineering material, an automobile material, a terminal material, an electric/electronic material, an OA equipment material, a sporting tool material, a footwear material, a fiber flocking material, or a packaging material.

16. A curable resin composition comprising:

a particle (S) being the core-shell type copolymer solid product according to claim 1, 4, 5, or 6 (provided that "a center (x) of the solid product" in the requirement (I) is replaced by "a center (x) of the particle (S)");
a curable resin (D); and
a curing agent (E).

**17.** The curable resin composition according to claim 16, wherein the particle (S) has an average particle diameter of 150 μm or less.

**18.** The curable resin composition according to claim 16 or 17, wherein the curable resin (D) comprises one or more selected from an epoxy resin and a phenol resin.

**19.** A cured product of the curable resin composition according to any one of claims 16 to 18.

**20.** A sliding part using the curable resin composition according to any one of claims 16 to 18 or the cured product according to claim 19.

**21.** A prepreg comprising:

a reinforced fiber (F); and
a resin composition (G), wherein
the resin composition (G) comprises 0.1 to 20% by mass of a particle (S) being the core-shell type polymer solid product according to claim 1, 4, 5, or 6 (provided that "a center (x) of the solid product" in the requirement (I) is replaced by "a center (x) of the particle (S)");
a thermosetting resin (H); and
a curing agent (I).

**22.** The prepreg according to claim 21, wherein the particle (S) is a non-crosslinked body or a crosslinked body.

**23.** The prepreg according to claim 21 or 22, wherein the particle (S) has an average particle diameter of 150 μm or less.

**24.** The prepreg according to any one of claims 21 to 23, wherein the reinforced fiber (F) is a carbon fiber.

**25.** The prepreg according to any one of claims 21 to 24, wherein the thermosetting resin (H) is an epoxy resin, and the curing agent (I) is an epoxy curing agent.

**26.** A fiber reinforced composite material obtained by curing the prepreg according to any one of claims 21 to 25.

**27.** A sintered sheet obtained by sintering at least a particle (S) being the core-shell type polymer solid product according to claim 1, 4, 5, or 6 (provided that "a center (x) of the solid product" in the requirement (I) is replaced by "a center (x) of the particle (S)").

**28.** The sintered sheet according to claim 27, wherein the particle (S) has an average particle diameter of 150 μm or less.

**29.** A filtration filter, a humidifying element, or an ink absorber for a printer, comprising the sintered sheet according to claim 27 or 28.

**30.** A gradient type polymer solid product comprising a graft copolymer (C) having: a main chain portion derived from a precursor polymer (A); and a graft portion derived from a polymer (B) different from the polymer (A), wherein, in infrared absorption spectroscopic measurement of a section passing through a center (x) of the solid product, a point (z) on a surface where a distance between the center (x) and the surface is shortest, and a middle point (y) of a line connecting the center (x) and the point (z), absorbance (Abs) at the center (x), at the middle point (y), and at the point (z) satisfy the following relationship:

$$X \geq 0.01,$$

$$Y \geq 0.01,$$

$$Z \geq 0.01;$$

and

$$X < Y < Z$$

wherein

X represents a value of Abs (key band of polymer (B))/Abs (key band of polymer (A)) at the center (x),
Y represents a value of Abs (key band of polymer (B))/Abs (key band of polymer (A)) at the middle point (y), and
Z represents a value of Abs (key band of polymer (B))/Abs (key band of polymer (A)) at the point (z).

**31.** The gradient type polymer solid product according to claim 30, being a particle having an average particle diameter of 0.0001 mm to 1000 mm.

**32.** The gradient type polymer solid product according to claim 30, being a molded article having an average thickness or diameter of 0.0001 mm to 50 mm.

**33.** The gradient type polymer solid product according to any one of claims 30 to 32, wherein the precursor polymer (A) is a polymer obtained from one, or two or more α-olefins selected from α-olefins having 2 to 18 carbon atoms.

**34.** The gradient type polymer solid product according to any one of claims 30 to 33, wherein the polymer (B) is a polymer of a monomer component comprising at least one monomer having an ethylenically unsaturated group and a polar functional group within a same molecule.

**35.** The gradient type polymer solid product according to any one of claims 30 to 34, having a grafting rate (%) of 1% or more and 150% or less, the grafting rate represented by the following expression:

$$\text{Grafting rate (\%)} = [\text{mass of polymer (B)/mass of precursor polymer (A)}] \times 100.$$

**36.** A method for producing the gradient type polymer solid product according to any one of claims 30 to 35, the method comprising grafting the polymer (B) different from the polymer (A) to a solid product comprising the precursor polymer (A) with a shape of the solid product retained.

**37.** The method for producing the gradient type polymer solid product according to claim 36, wherein the solid product comprising the precursor polymer (A) is a particle having an average particle diameter of 0.0001 mm to 1000 mm.

**38.** The method for producing the gradient type polymer solid product according to claim 36, wherein the solid product comprising the precursor polymer (A) is a molded article having an average thickness or diameter of 0.0001 mm to 50 mm.

[Figure 1]

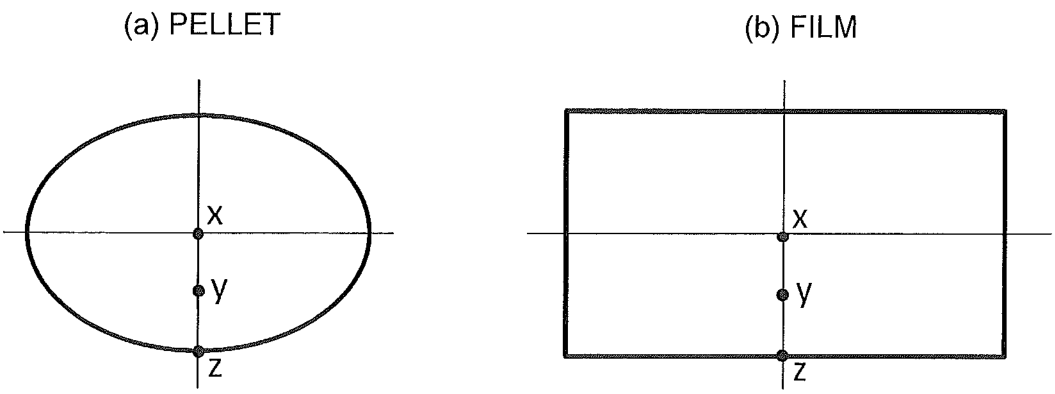

**INTERNATIONAL SEARCH REPORT**

International application No. PCT/JP2017/043926

A. CLASSIFICATION OF SUBJECT MATTER
Int.Cl. C08F291/00(2006.01)i, B01D39/16(2006.01)i, C08J5/24(2006.01)i, C08J9/24(2006.01)i, C08L51/00(2006.01)i, C09D133/08(2006.01)i, C09D151/00(2006.01)i, C09D151/06(2006.01)i, C09D175/04(2006.01)i, C10M171/00(2006.01)i, C10N30/02(2006.01)n, C10N30/06(2006.01)n

According to International Patent Classification (IPC) or to both national classification and IPC

B. FIELDS SEARCHED

Minimum documentation searched (classification system followed by classification symbols)
Int.Cl. C08F255/00-255/10, C08F283/02, C08F291/00-291/18, C08J5/24, C08J9/24, C08L51/00, C08L51/06, C08J7/16-7/18

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 48-44386 A (KURARAY CO., LTD.) 26 June 1973, claims, page 2, upper right column, line 4 to page 3, upper left column, line 19, page 3, lower left column, line 2 to lower right column, line 13, examples (Family: none) | 1-38 |
| Y | JP 54-43595 A (SHOWA DENSEN DENRAN KABUSHIKI KAISHA) 06 April 1979, claims, page 2, upper right column, line 13 to lower left column, line 5 (Family: none) | 1-38 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 February 2018 (05.02.2018) | 27 February 2018 (27.02.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No. PCT/JP2017/043926

C (Continuation). DOCUMENTS CONSIDERED TO BE RELEVANT

| Category* | Citation of document, with indication, where appropriate, of the relevant passages | Relevant to claim No. |
|---|---|---|
| Y | OKAMURA, Hirokazu, SUDO, Atushi, ENDO, Takeshi, "Generation of Radical Species on Polypropylene by Alkylborane-Oxygen System and Its Application to Graft Polymerization, Journal of Polymer Science. Part A". Polymer Chemistry, 2009, vol. 47, no. 22, pp. 6163-6167 | 1-38 |
| Y<br>A | JP 2010-241885 A (MITSUI CHEMICALS, INC.) 28 October 2010, claims, paragraphs [0040], [0043], [0112]-[0113], examples 29-30 (Family: none) | 1-29<br>30-38 |
| Y<br>A | JP 11-223821 A (SEKISUI FINECHEM CO., LTD.) 17 August 1999, claims, paragraphs [0022]-[0023], [0027], [0045], [0048]-[0050], example 1 (Family: none) | 1-3, 5-11<br>4, 12-38 |
| A | JP 2014-196444 A (SEKISUI PLASTICS CO., LTD.) 16 October 2014 (Family: none) | 1-38 |
| A | JP 2011-26508 A (SEKISUI PLASTICS CO., LTD.) 10 February 2011 (Family: none) | 1-38 |
| A | JP 2013-203863 A (SEKISUI PLASTICS CO., LTD.) 07 October 2013 (Family: none) | 1-38 |
| A | JP 7-149843 A (KANEKA CORP.) 13 June 1995 & US 2002/0198326 A1 & WO 1995/013320 A1 & EP 679684 A1 & CN 1116429 A | 1-38 |
| A | JP 54-1358 B1 (THE FURUKAWA ELECTRIC CO., LTD.) 23 January 1979 & GB 1293418 A & DE 2053191 A1 | 1-38 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2016039461 A
- US 3141862 A
- JP 2013170231 A
- JP 9111179 A
- JP 2004176054 A
- JP 2009221460 A
- JP 2011057907 A
- JP 2012193322 A
- JP 2014009280 A
- WO 2016136540 A
- JP 2011080013 A
- JP 2016194065 A
- JP 5805931 B
- JP 3686172 B


### Non-patent literature cited in the description


- *MACROMOLECULES,* 2005, vol. 38, 8966-8970
- *Journal of Polymer Science,* 2009, vol. 47, 6163-6167